(19) Europäisches Patentamt / European Patent Office / Office européen des brevets

(11) **EP 4 322 677 A1**

(12) **EUROPEAN PATENT APPLICATION**
published in accordance with Art. 153(4) EPC

(43) Date of publication:
**14.02.2024 Bulletin 2024/07**

(21) Application number: **22784931.2**

(22) Date of filing: **06.04.2022**

(51) International Patent Classification (IPC):
**H04W 72/12** (2023.01)    **H04W 72/04** (2023.01)
**H04L 5/00** (2006.01)    **H04L 1/00** (2006.01)
**H04L 5/14** (2006.01)

(52) Cooperative Patent Classification (CPC):
**H04L 1/00; H04L 5/00; H04L 5/14; H04W 72/04; H04W 72/12**

(86) International application number:
**PCT/KR2022/004910**

(87) International publication number:
**WO 2022/216022 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2021  KR 20210044629**
**11.05.2021  KR 20210060840**

(71) Applicant: **LG Electronics Inc.**
**Yeongdeungpo-gu**
**Seoul 07336 (KR)**

(72) Inventors:
• **YOU, Hyangsun**
  **Seoul 06772 (KR)**
• **KO, Hyunsoo**
  **Seoul 06772 (KR)**
• **YANG, Suckchel**
  **Seoul 06772 (KR)**

(74) Representative: **Plasseraud IP**
**66, rue de la Chaussée d'Antin**
**75440 Paris Cedex 09 (FR)**

(54) **METHOD AND DEVICE FOR TRANSMITTING PHYSICAL UPLINK SHARED CHANNEL**

(57)    A method for transmitting a PUSCH by a device in a wireless communication system and devices using the method are provided. A device (for example, a terminal) receives an upper layer configuration message for configuring a resource and receives a downlink control information (DCI) format for scheduling transmission of a PUSCH, wherein the DCI format indicates a specific row in a resource allocation table, and the specific row indicates symbols which can be used for the transmission of the PUSCH in a slot. The device determines the number (N-K) of slots for the transmission of the PUSCH, and transmits the PUSCH in N·K slots. When transmission of a PUCCH and the transmission of the PUSCH collide in a predetermined slot, the device determines whether to count the predetermined slot in the N·K slots according to the content of the transmission of the PUCCH.

FIG. 14

Receiving a higher layer configuration message for setting resources — S141

Receiving DCI format for scheduling PUSCH transmission (for example, DCI format 0_1 or DCI format 0_2) The DCI format indicates a specific row in a resource allocation table, and the specific row informs of symbols that can be used for the PUSCH transmission in a slot — S142

Determining the number of slots (N·K) for the PUSCH transmission (Specifically, if at least one of the symbols available for PUSCH transmission in a slot overlaps with a downlink symbol indicated by the higher layer configuration message, the slot is not counted in the N·K slots The first slot in which the first PUCCH transmission carrying periodic CSI and the PUSCH transmission are expected to collide are determined as an unavailable slot and is not counted among the N·K slots. A second slot in which a second PUCCH transmission not carrying periodic CSI and the PUSCH transmission are expected to collide are determined as an available slot and counted in the N·K slots However, the PUSCH transmission in the second slot is not performed and is postponed to the next slot) — S143

Transmitting the PUSCH in the N·K slots — S144

**Description**

TECHNICAL FIELD

The present disclosure relates to a method for transmitting a physical uplink shared channel of a user equipment in a wireless communication system and an apparatus using the method.

BACKGROUND ART

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (UE) sensitive to reliability and latency are under discussion. Introduction of next-generation RAT considering enhanced mobile broadband communication, massive MTC, and ultra-reliable and low-latency communication (URLLC) is under discussion. In this disclosure, for convenience of description, this technology may be referred to as new RAT or new radio (NR). NR is also referred to as a fifth generation (5G) system.

In the existing wireless communication system, a transport block (TB) is mapped to one transmission time interval (TTI, for example, a slot) and transmitted. However, in a future wireless communication system such as NR, a transport block may be mapped to a plurality of TTIs (slots) and transmitted. This is called TB processing over multi-slot (TBoMS). TBoMS may be applied to physical uplink shared channel (PUSCH) transmission, and a PUSCH to which TBoMS is applied may be referred to as a TBoMS PUSCH. Repeated transmission can also be applied to TBoMS PUSCH transmission to improve coverage.

Meanwhile, conventionally, when PUSCH is repeatedly transmitted, it is transmitted based on consecutive slots. In this case, a slot that cannot be used for PUSCH transmission may be included in the consecutive slots, and then the PUSCH cannot be repeatedly transmitted as many times as the set number of repetitions. To solve this problem, setting/defining repeated PUSCH transmissions based on available slots has been discussed. At this time, if the network and the UE can understand differently whether a slot is an available slot, ambiguity occurs in repeated PUSCH transmissions, which is not desirable.

DISCLOSURE

TECHNICAL PROBLEM

A technical object of the disclosure is to provide a method and an apparatus for transmitting a PUSCH in a wireless communication system.

TECHNICAL SOLUTION

The present specification provides a PUSCH transmission method of a device, a PUSCH reception method, and devices using the method. Specifically, the device (e.g., UE) receives a higher layer configuration message for configuring resources and receives a downlink control information (DCI) format for scheduling the PUSCH transmission. The DCI format indicates a specific row in a resource allocation table, and the specific row informs symbols that can be used for the PUSCH transmission in a slot. The device determines the number of slots (N·K) for the PUSCH transmission, and transmits the PUSCH in the N·K slots. At this time, if a PUCCH transmission collides with the PUSCH transmission in a certain slot, it is determined whether to count the slot to the N·K slots according to the contents of the PUCCH transmission.

The apparatus includes a transceiver for transmitting and receiving radio signals and a processor operative in combination with the transceiver. The processor performs the PUSCH transmission method described above.

A chipset in the apparatus includes a processor and a memory coupled to the processor and storing instructions to be executed by the processor. The processor performs the PUSCH transmission method described above.

The above-described PUSCH transmission method may be performed by instructions in a computer readable medium (CRM).

From the side of the base station, a PUSCH reception method is provided. The method includes transmitting a higher layer configuration message for configuring resources to a UE and transmitting a downlink control information (DCI) format for scheduling the PUSCH transmission to the UE. The DCI format indicates a specific row in a resource allocation table, the specific row informs symbols that can be used for the PUSCH transmission in a slot, and in N·K (N, K is a natural number) slots, PUSCH is received from the UE. If at least one of the symbols available for PUSCH transmission in the slot overlaps with a downlink symbol indicated by the higher layer configuration message, the slot is not counted in the N·K slots. A first slot in which a first PUCCH transmission carrying periodic CSI and the PUSCH transmission are expected to collide is determined as unavailable slots and are not counted in the N·K slots. A second slot in which a second PUCCH transmission that does not carry periodic CSI and the PUSCH transmission are expected to collide with is determined as an available slot and counted in the N·K slots. The PUSCH reception in the second slot is postponed to the next slot.

The base station includes a transceiver for transmitting and receiving radio signals and a processor operating in combination with the transceiver, and the method for receiving the PUSCH may be performed by the processor.

## ADVANTAGEOUS EFFECTS

According to the present disclosure, repeated PUSCH transmissions can be set/defined based on available slots, and at this time, there is no ambiguity in repeated PUSCH transmissions because misunderstanding about available slots does not occur between a network and a UE.

Since repeated PUSCH transmission can be performed using as many slots as possible, coverage can be improved.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described in the present specification, and may include various effects that can be understood or derived from the technical features of the present specification.

## BRIEF DESCRIPTION OF THE DRAWINGS

FIG. 1 illustrates a system structure of a New Generation Radio Access Network (NG-RAN) to which NR is applied.

FIG. 2 is a diagram showing a wireless protocol architecture for a user plane.

FIG. 3 is a diagram showing a wireless protocol architecture for a control plane.

FIG. 4 illustrates a functional division between an NG-RAN and a 5GC.

FIG. 5 illustrates an example of a frame structure that may be applied in NR.

FIG. 6 illustrates a slot structure of the NR frame.

FIG. 7 illustrates a structure of self-contained slot.

FIG. 8 illustrates physical channels and general signal transmission.

FIG. 9 illustrates PUSCH repetition type A.

FIG. 10 illustrates PUSCH repetition type B.

FIG. 11 illustrates a case in which TBoMS PUSCH transmission is repeated.

FIG. 12 illustrates a case in which all symbols of an uplink slot cannot be allocated for PUSCH transmission in a PUSCH repetition type A TDRA.

FIG. 13 illustrates symbol allocation allowing collision between TBoMS PUSCH and SRS in PUSCH repetition type A TDRA.

FIG. 14 illustrates a PUSCH transmission method of a UE according to an embodiment of the present disclosure.

FIG. 15 illustrates a case where PUSCH transmission and PUCCH transmission collide.

FIG. 16 illustrates a signaling process between a network and a UE according to an embodiment of the present disclosure.

FIG. 17 illustrates a wireless device applicable to this specification.

FIG. 18 shows another example of a wireless device.

FIG. 19 shows an example of the structure of a signal processing module.

FIG. 20 shows another example of the structure of a signal processing module in a transmission device.

FIG. 21 illustrates an example of a wireless communication device according to an embodiment of the present disclosure.

FIG. 22 shows another example of a wireless device applied to the present specification.

FIG. 23 illustrates the communication system 1 applied to this specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDDCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

A wireless communication system to which the present disclosure may be referred to as an Evolved-UMTS Terrestrial Radio Access Network (E-UTRAN) or a Long Term Evolution (LTE)/LTE-A system, for example.

The E-UTRAN includes at least one base station (BS) which provides a control plane and a user plane to a user equipment (UE). The UE may be fixed or mobile, and may be referred to as another terminology, such as a mobile station (MS), a user terminal (UT), a subscriber station (SS), a mobile terminal (MT), a wireless device, terminal, etc. The BS is generally a fixed station that communicates with the UE and may be referred to as another terminology, such as an evolved node-B (eNB), a base transceiver system (BTS), an access point, gNB, etc.

The BSs are interconnected by means of an X2 interface. The BSs are also connected by means of an S1 interface to an evolved packet core (EPC), more specifically, to a mobility management entity (MME) through S1-MME and to a serving gateway (S-GW) through S1-U.

The EPC includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

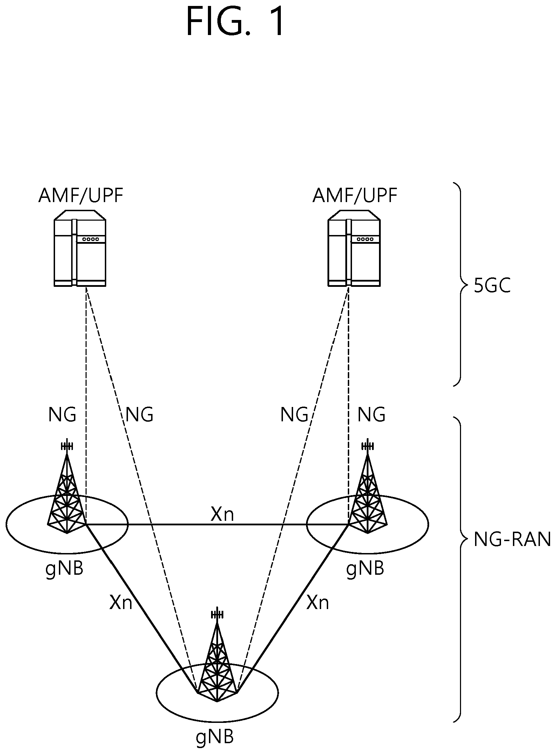

FIG. 1 illustrates a system structure of a next generation radio access network (NG-RAN) to which NR is applied.

Referring to FIG. 1, the NG-RAN may include a gNB and/or an eNB that provides user plane and control plane protocol termination to a UE. FIG. 1 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

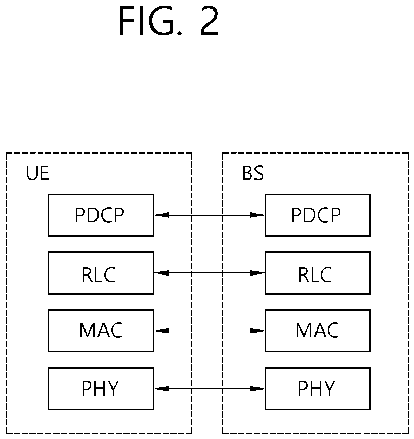

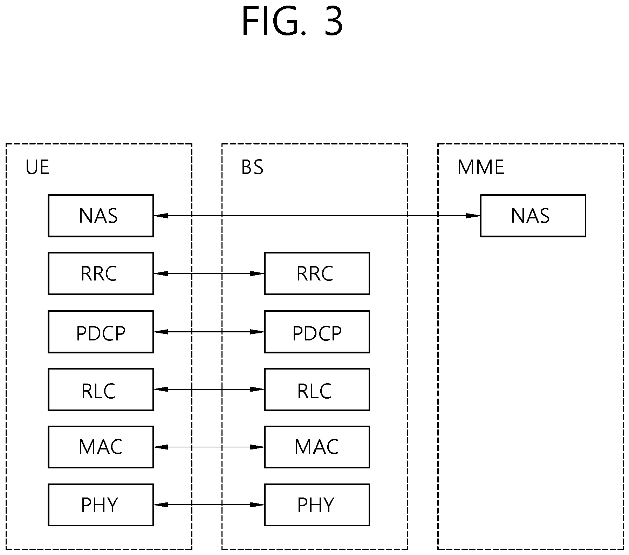

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for transmission such as a slot/subframe.

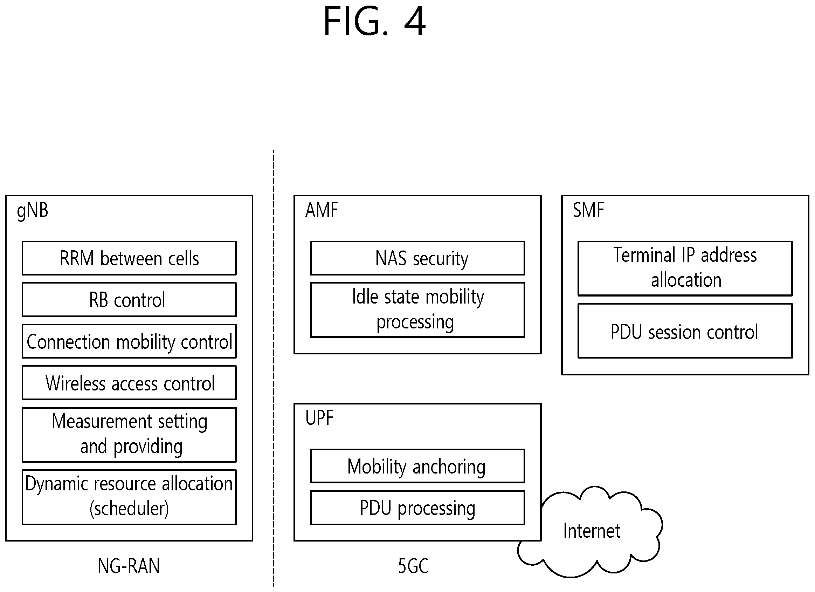

FIG. 4 illustrates a functional division between an NG-RAN and a 5GC.

Referring to FIG. 4, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

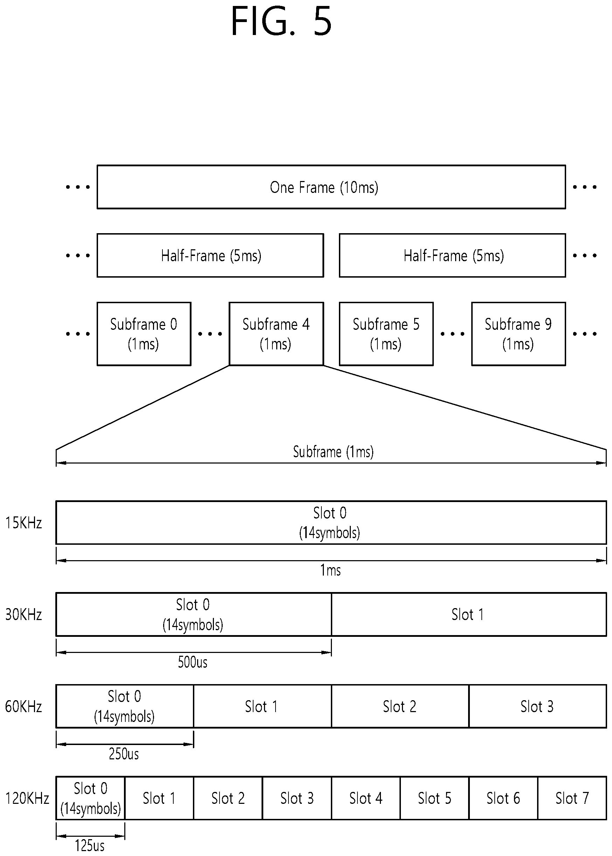

FIG. 5 illustrates an example of a frame structure that may be applied in NR.

Referring to FIG. 5, a radio frame (which may be called as a frame hereinafter) may be used for uplink and downlink transmission in NR. A frame has a length of 10 ms and may be defined as two 5 ms half-frames (Half-Frame, HF). A half-frame may be defined as five 1 ms subframes (Subframe, SF). A subframe may be divided into one or more slots, and the number of slots in a subframe depends on subcarrier spacing (SCS). Each slot includes 12 or 14 OFDM(A) symbols according to a cyclic prefix (CP). When a normal CP is used, each slot includes 14 symbols. When an extended CP is used, each slot includes 12 symbols. Here, the symbol may include an OFDM symbol (or a CP-OFDM symbol) and an SC-FDMA symbol (or a DFT-s-OFDM symbol).

The following table 1 illustrates a subcarrier spacing configuration $\mu$.

[Table 1]

| $\mu$ | $\Delta f = 2^\mu \cdot 15$[kHz] | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{\text{frame},\mu}_{\text{slot}}$), the number of slots in a subframe ($N^{\text{subframe},\mu}_{\text{slot}}$), the number of symbols in a slot ($N^{\text{slot}}_{\text{symb}}$), and the like, according to subcarrier spacing configurations $\mu$.

[Table 2]

| $\mu$ | $N^{\text{slot}}_{\text{symb}}$ | $N^{\text{frame},\mu}_{\text{slot}}$ | $N^{\text{subframe},\mu}_{\text{slot}}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In FIG. 5, $\mu$=0, 1, 2, and 3 are exemplified.

Table 2-1 below exemplifies that the number of symbols per slot, the number of slots per frame, and the number of slots per subframe vary according to SCS ($\mu$ = 2, 60 KHz) when the extended CP is used.

[Table 2-1]

| $\mu$ | $N^{\text{slot}}_{\text{symb}}$ | $N^{\text{frame},u}_{\text{slot}}$ | $N^{\text{subframe},u}_{\text{slot}}$ |
|---|---|---|---|
| 2 | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

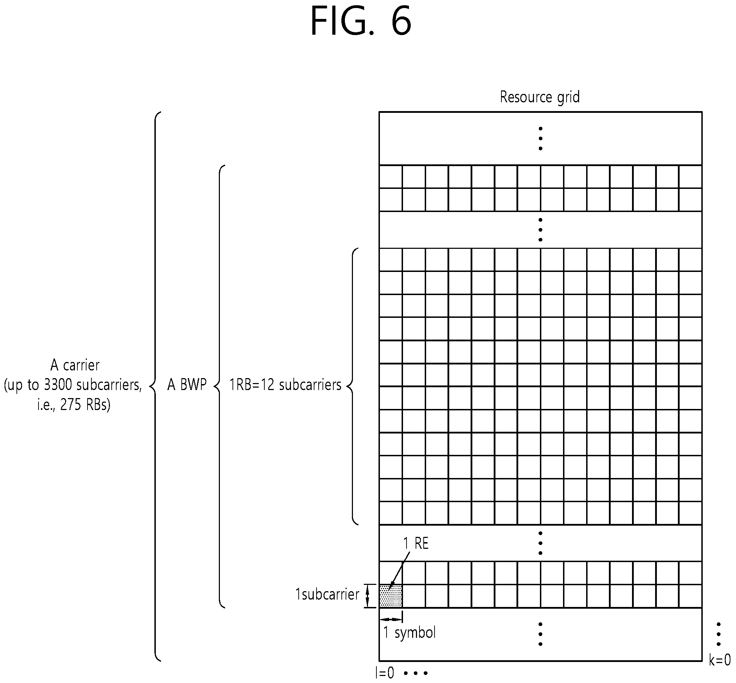

FIG. 6 illustrates a slot structure of a NR frame.

A slot may comprise a plurality of symbols in a time domain. For example, in case of a normal CP, one slot may include 14 symbols. However, in case of an extended CP, one slot may include 12 symbols. The carrier may include a plurality of subcarriers in a frequency domain. A resource block (RB) may be defined as a plurality of consecutive subcarriers (e.g., 12) in the frequency domain. A bandwidth part (BWP) may be defined as a plurality of consecutive (P)RBs in the frequency domain, and may correspond to one numerology (e.g., SCS, CP length, etc.). A carrier may include a maximum of N (e.g., 5) BWPs. Data communication is performed through the activated BWP, and only one BWP can be activated for one UE. Each element in the resource grid is referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |

(continued)

| Aggregation level | Number of CCEs |
|---|---|
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring means decoding each PDCCH candidate according to a downlink control information (DCI) format. The UE monitors a set of PDCCH candidates in one or more control resource sets (CORESETs, described below) on the activated DL BWP of each activated serving cell for which PDCCH monitoring is configured according to a corresponding search space set.

A new unit called a control resource set (CORESET) may be introduced in the NR. The UE may receive a PDCCH in the CORESET.

The CORESET includes $N^{CORESET}_{RB}$ resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. A plurality of CCEs (or REGs) may be included in the CORESET. One CCE may be composed of a plurality of resource element groups (REGs), and one REG may include one OFDM symbol in the time domain and 12 resource elements in the frequency domain.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the conventional wireless communication system (e.g., LTE/LTE-A) is configured over the entire system band used by a base station (BS). All the UEs, excluding some (e.g., eMTC/NB-IoT UE) supporting only a narrow band, should be able to receive wireless signals of the entire system band of the BS in order to properly receive/decode control information transmitted by the BS.

On the other hand, in NR, CORESET described above was introduced. CORESETs are radio resources for control information to be received by the UE and may use only a portion, rather than the entirety of the system bandwidth in the frequency domain. In addition, in the time domain, only some of the symbols in the slot may be used. The BS may allocate the CORESET to each UE and may transmit control information through the allocated CORESET.

The CORESET may include a UE-specific CORESET for transmitting UE-specific control information and a common CORESET for transmitting control information common to all UEs.

Meanwhile, NR may require high reliability according to applications. In such a situation, a target block error rate (BLER) for downlink control information (DCI) transmitted through a downlink control channel (e.g., physical downlink control channel (PDCCH)) may remarkably decrease compared to those of conventional technologies. As an example of a method for satisfying requirement that requires high reliability, content included in DCI can be reduced and/or the amount of resources used for DCI transmission can be increased. Here, resources can include at least one of resources in the time domain, resources in the frequency domain, resources in the code domain and resources in the spatial domain.

In NR, the following technologies/features can be applied.

<Self-contained subframe structure>

In NR, a structure in which a control channel and a data channel are time-division-multiplexed within one TTI can be considered as a frame structure in order to minimize latency.

Downlink (DL) transmission and uplink (UL) transmission are sequentially performed within one subframe and thus DL data can be transmitted and UL ACK/NACK (Acknowledgement/negative-acknowledgement) can be received within the subframe. Consequently, a time required from occurrence of a data transmission error to data retransmission is reduced, thereby minimizing latency in final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

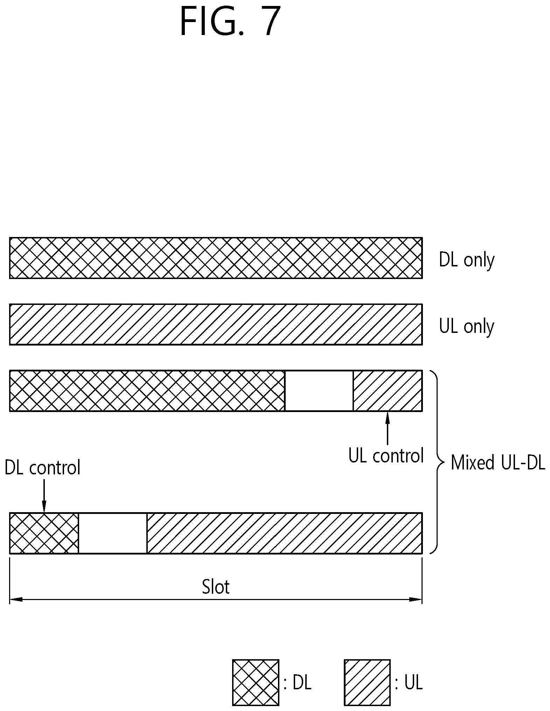

FIG. 7 illustrates a structure of self-contained slot.

In NR system, one slot includes all of a DL control channel, DL or UL data channel, UL control channel, and so on. For example, the first N symbols in a slot may be used for transmitting a DL control channel (in what follows, DL control region), and the last M symbols in the slot may be used for transmitting an UL control channel (in what follows, UL control region). N and M are each an integer of 0 or larger. A resource region located between the DL and UL control regions (in what follows, a data region) may be used for transmission of DL data or UL data. As one example, one slot may correspond to one of the following configurations. Each period is listed in the time order.

    1. DL only configuration
    2. UL only configuration
    3. Mixed UL-DL configuration

    -   DL region + GP (Guard Period) + UL control region
    -   DL control region + GP + UL region

        a DL region: (i) a DL data region, (ii) DL control region plus DL data region
        a UL region: (i) an UL data region, (ii) UL data region plus UL control region.

In the DL control region, a PDCCH may be transmitted, and in the DL data region, a PDSCH may be transmitted. In the UL control region, a PUCCH may be transmitted, and in the UL data region, a PUSCH may be transmitted. In the PDCCH, Downlink Control Information (DCI), for example, DL data scheduling information or UL data scheduling information may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

In the NR, in a time domain, a synchronization signal block (SSB, or also referred to as a synchronization signal and physical broadcast channel (SS/PBCH) block) may consist of 4 OFDM symbols indexed from 0 to 3 in an ascending order within a synchronization signal block, and a primary synchronization signal (PSS), secondary synchronization signal (SSS), and a PBCH associated with demodulation reference signal (DMRS) may be mapped to the symbols. As described above, the synchronization signal block (SSB) may also be represented by an SS/PBCH block.

In NR, since a plurality of synchronization signal blocks (SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

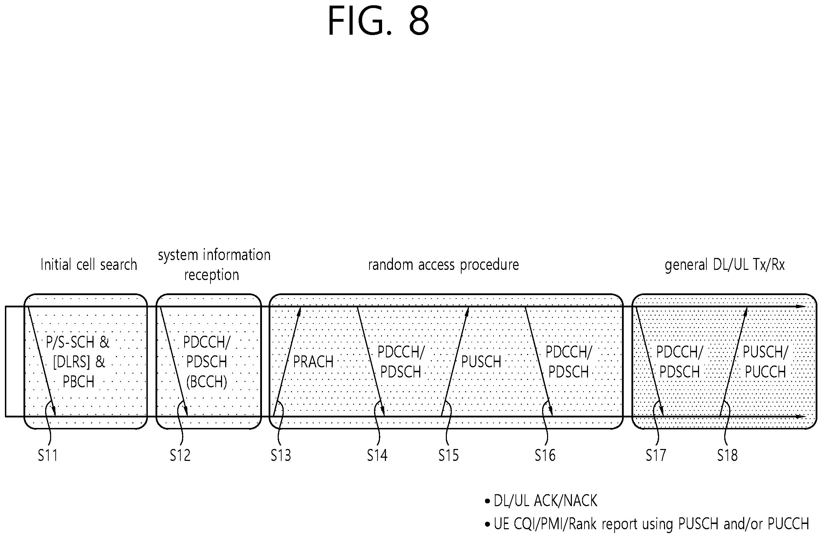

FIG. 8 illustrates physical channels and typical signal transmission.

Referring to FIG. 8, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S 11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

Hereinafter, coverage enhancement, which is currently under discussion, will be described.

Because coverage directly affects service quality and cost (e.g., CAPEX (Capital Expenses) and OPEX (Operating Expenses)), it is one of the key factors that telecommunication companies consider when commercializing cellular networks. Many countries are making more spectrum available in FR1, such as 3.5 GHz, which is usually a higher frequency than LTE or 3G.

NR is designed to operate at much higher frequencies such as 28 GHz or 39 GHz in FR2 compared to LTE. Higher frequencies inevitably cause radio channels to experience higher path loss, making it more difficult to maintain the same quality of service as legacy RAT (radio access technology).

An important mobile application is a voice service that expects ubiquitous coverage at all times, no matter where the general subscriber is.

In evaluating baseline performance, the following channels may be potential bottlenecks for FR1.

In the first order, PUSCH for eMBB (for FDD and TDD with DDDSU, DDDSUDDSUU and DDDDDDDSUU), PUSCH for VoIP (for FDD and TDD with DDDSU, DDDSUDDSUU).

In the second order, PRACH format B4, PUSCH of message 3, PUCCH format 1, PUCCH format 3 of 11 bits, PUCCH format 3 of 22 bits, broadcast PDCCH.

The next channel could be a potential bottleneck for the city's 28 GHz scenario. PUSCH for eMBB (DDDSU and DDSU), PUSCH for VoIP (DDDSU and DDSU), PUCCH format 3 of 11 bits, PUCCH format 3 of 22 bits, PRACH format B4, and PUSCH of message 3.

For PUSCH enhancement, the following may be discussed.

For enhancement to PUSCH repetition type A, 1) the maximum number of repetitions can be increased to a number determined in the course of work, or 2) the number of repetitions calculated based on available uplink slots may be used.

In order to support TB (transport block) processing through the multi-slot PUSCH, the TBS (transport block size) may be determined based on the multi-slot and transmitted through the multi-slot.

To enable joint channel estimation, a mechanism that enables joint channel estimation for multiple PUSCH transmissions may be specified based on conditions for maintaining power consistency and phase continuity.

Inter-slot frequency hopping using inter-slot bundling that enables joint channel estimation may be considered.

To improve PUCCH, the following mechanisms may be considered. 1) a signaling mechanism to support dynamic PUCCH repetition factor indication, 2) a mechanism supporting DM-RS (demodulation-reference signal: DMRS) bundling over PUCCH repetitions, 3) a mechanism to support PUSCH repetition type A for message 3.

Based on this discussion, an operation when PUSCH transmission and PUCCH transmission overlap will be described. PUSCH transmission may be TBoMS PUSCH transmission according to TB processing over multi-slot PUSCH (TBoMS) operation or repeatedly transmitted PUSCH/TBoMS PUSCH for coverage enhancement of the UE.

PUSCH repetition type A and type B are introduced in NR Rel-15/16, and transmission is performed as follows according to the PUSCH repetition type.

1. PUSCH repetition type A

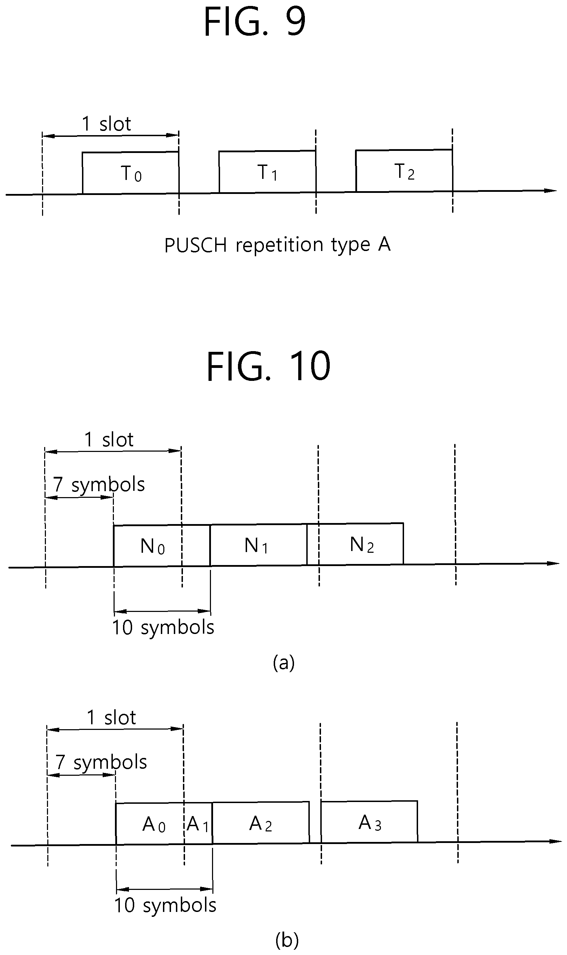

FIG. 9 illustrates PUSCH repetition type A.

Referring to FIG. 9, PUSCH repetition type A is a slot based repetition. As shown in FIG. 9, repetition may be performed with the same PUSCH transmission start symbol position and PUSCH transmission symbol length (meaning the number of symbols transmitting PUSCH) for each slot. At this time, if there is an invalid symbol that cannot be used for PUSCH transmission among symbol resources constituting a specific PUSCH repetition, the transmission of the corresponding PUSCH repetition is dropped and not performed. For example, when a total of 4 repeated PUSCH transmissions of Rep0, Rep1, Rep2, and Rep3 are performed, when an invalid symbol is included in the symbol resource constituting Rep1, the transmission of Rep1 is dropped, and only transmissions of Rep0, Rep2, and Rep3 are performed. Accordingly, the number of repetitions actually performed may be smaller than the configured number of repetitions. Hereinafter, a PUSCH transmitted according to a PUSCH repetition type A scheme may be referred to as a repetition type A PUSCH for convenience.

For PUSCH repetition type A, frequency hopping may be configured for the UE according to a higher layer parameter. One of the following two frequency hopping modes can be configured. 1) Intra-slot frequency hopping, applicable to single slot and multi-slot PUSCH transmission, 2) Inter-slot frequency hopping, applicable to multi-slot PUSCH transmission.

2. PUSCH repetition type B

FIG. 10 illustrates PUSCH repetition type B.

Referring to FIG. 10, in PUSCH repetition type B, repetition is performed in units of a symbol length in which an actual PUSCH is transmitted. When the PUSCH is transmitted in 10 symbols as in (a) of FIG. 10, PUSCH repetition is performed in units of 10 consecutive symbols. Nominal repetition is repetition of determining PUSCH repeated transmission time resources without considering slot boundaries, invalid symbols, and the like. However, in the case of actual PUSCH repetition, one PUSCH cannot be transmitted at the slot boundary.

Accordingly, when a nominal PUSCH transmission includes a slot boundary, two actual repetitions are performed based on the slot boundary as shown in (b) of FIG. 10. In addition, one PUSCH transmission may be performed only through consecutive symbols. If there is an invalid symbol in the time resource for which PUSCH repetition is to be transmitted, the actual repetition is constructed using consecutive symbols bounded by an invalid symbol. For example, if symbols #0~#9 constitute one nominal repetition and symbols #3~#5 are invalid symbols, symbols #0~#2 and symbols #6~#9, excluding the invalid symbols, each constitute one actual repetition.

When a symbol that cannot be used for PUSCH transmission (e.g., a symbol indicated as a downlink symbol by DCI format 2_0) is generated/included in one actual repetition resource, the UE drops and does not perform the actual repeated transmission. Hereinafter, a PUSCH transmitted according to a PUSCH repetition type B scheme may be referred to as a repetition type B PUSCH for convenience.

When PUSCH repetition type A is applied in NR, the PUSCH transmission slot resource and TB mapping process are as follows.

For PUSCH repetition type A, when transmitting a PUSCH scheduled by DCI format 0_1 or 0_2 having a CRC scrambled to C-RNTI (Radio Network Temporary Identifier), MCS-C-RNTI, or CS-RNTI with NDI (new data indicator)=1 in a PDCCH, the number of repetitions K may be determined as follows.

1) If 'numberofrepetitions' is in the resource allocation table, the number of repetitions K is equal to 'numberofrepetitions'.
2) Else if the UE is configured with 'pusch-AggregationFactor', the number of repetitions K is the same as 'pusch-AggregationFactor'.
3) Otherwise, K=1.

For PUSCH repetition type A, if K>1, the same symbol allocation is applied over K consecutive slots. And PUSCH is limited to a single transport layer.

The UE repeats the TB over K consecutive slots applying the same symbol allocation in each slot. A redundancy version (RV) to be applied to the n (n = 0, 1, ... K-1) th transmission occasion of the TB may be determined according to Table 4 below.

[Table 4]

| $rv_{id}$ indicated by the DCI scheduling the PUSCH | $rv_{id}$ to be applied to $n^{th}$ transmission occasion (repetition type A) or $n^{th}$ actual repetition (repetition Type B) | | | |
|---|---|---|---|---|
| | $n$ mod 4 = 0 | $n$ mod 4 = 1 | $n$ mod 4 = 2 | $n$ mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

In the case of PUSCH repetition type A, if a specific condition is satisfied, PUSCH transmission may be omitted in one slot of multi-slot PUSCH transmission.

A transport block (TB) of PUSCH is mapped and transmitted through symbol resources in one slot. When PUSCH repetition is performed K times by applying PUSCH repetition type A, the TB is repeatedly transmitted K times using K consecutive slots. In this case, the RV (redundancy version) value is determined as shown in Table 4 according to the order of the TB transmission occasion.

The same symbol allocation may be applied to each slot in which TB transmission is performed. Information on symbol allocation used for PUSCH transmission in each slot may be indicated through a time domain resource assignment field of DCI for scheduling PUSCH. The value of SLIV applied by the UE for PUSCH transmission is indicated through the time domain resource assignment (TDRA) field, through this, the PUSCH transmission start symbol position (S) and the transmission symbol length (L) in the slot may be indicated. The UE, for example, may use the S-th symbol to the S+L-1 th symbol in the slot for PUSCH transmission.

Meanwhile, a technique of transmitting one transport block (TB) using symbol resources located in a plurality of slots for coverage enhancement (CE) of a PUSCH may be introduced. Specifically, the time resource constituting the PUSCH is composed of consecutive/non-consecutive symbols located over a plurality of slots, and one transport block (TB) may be mapped to a corresponding PUSCH resource and transmitted.

Alternatively, one PUSCH consists of symbol resources located in one slot, but one TB may be mapped using a plurality of PUSCH resources located in different slots.

As a result, one TB is mapped and transmitted to consecutive/non-consecutive symbol resources located in a plurality of different slots. In this disclosure, this transmission technique is referred to as multi-slot TB mapping or TB processing over multi-slot (TBoMS).

Meanwhile, when PUSCH transmission and PUCCH transmission are performed in the same slot, PUCCH transmission and PUSCH transmission may be performed as follows.

When PUCCH without repetition (PUCCH without repetition) and OFDM symbol resources of PUSCH transmission overlap each other in a specific slot, UCI is multiplexed with PUSCH data and transmitted through PUSCH. That is, UCI piggyback on PUSCH (data and UCI multiplexing) is performed.

When PUCCH with repetition (PUCCH with repetition) and OFDM symbol resources of PUSCH transmission overlap in a specific slot, as follows, PUCCH is transmitted without performing PUSCH transmission in the corresponding slot resource.

When the UE transmits PUCCH over a first number ($N^{repeat}_{PUCCH}$) of slots, transmits a repetition type A PUSCH over a second number of slots, and the PUCCH transmission overlaps with the repetition type A PUSCH transmission in one or more slots, and the conditions for multiplexing UCI to PUSCH are satisfied in the overlapping slot, the UE transmits PUCCH in the overlapping slot and does not transmit PUSCH.

Hereinafter, PUSCH repetitions (TB repetitions) will be described on the assumption that PUSCH repetition type A is applied. In addition, it is assumed that the PUSCH is transmitted by applying multi-slot TB mapping, in which one PUSCH TB is mapped to a plurality of slot resources and transmitted. For convenience, this PUSCH is referred to as a TB processing over multi-slot (TBoMS) PUSCH.

A plurality of slots to which a TB is mapped may be configured as slots continuously or non-continuously located on the time axis. When a TB is mapped to a plurality of slots, it means that the TB is mapped to all or some symbol resources located in the corresponding slots. In this case, slot resources to which one TB is mapped may be referred to as a transmission occasion of the TB. One TB may perform continuous rate-matching on resources within a plurality of slots constituting a transmission occasion.

While applying multi-slot TB mapping (TBoMS) to PUSCH transmission, repetition may also be applied for additional coverage enhancement. If PUSCH TB repetitions are performed K times, TB is repeatedly transmitted K times through K transmission occasions.

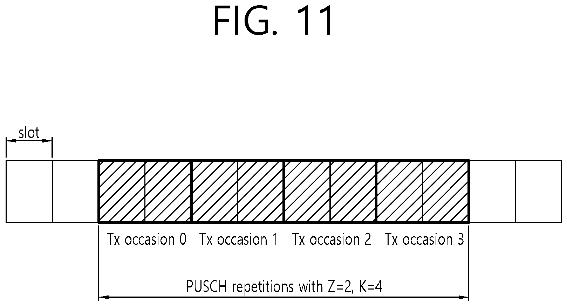

FIG. 11 illustrates a case where multi-slot TB mapping and repetition are applied to PUSCH transmission.

Referring to FIG. 11, for example, slot resources to which one TB is mapped may consist of Z=2 slots, and the TB may be repeatedly transmitted K=4 times. As shown in FIG. 11, each transmission occasion of TB repetition is composed of Z = 2 slots, and transmitted repeatedly K = 4 times through the 0th transmission occasion to the 3rd transmission occasion. In this specification, Z may also be represented by N.

Hereinafter, when PUSCH TB mapping to multi-slot is performed for coverage enhancement of the UE, a method of operating the UE in case of transmission resource collision between the PUSCH and another channel is proposed. Hereinafter, it is assumed that PUSCH repetition type A is applied to PUSCH repetitions (TB repetitions).

When performing a TB processing over multi-slot (TBoMS) PUSCH operation to improve coverage of a UE, slot resources to which one TB is mapped are proposed.

In the present disclosure, a slot available for PUSCH transmission or an available slot means that the corresponding slot is a slot that can be used for PUSCH transmission. More specifically, a slot which is available/an available slot may mean the following.

Alt a. It means an uplink slot. That is, it means a slot in which all symbols in the slot are composed of uplink symbols. For example, it means a slot in which all symbols in the slot are configured for uplink from the network through tdd-UL-DL-ConfigurationCommon or tdd-UL-DL-ConfigurationDedicated, which is an information element of a higher layer (RRC).

Alt b. It means a slot that all symbols used for PUSCH transmission in the slot are composed of uplink symbols. For example, it means a slot in which all symbols used for PUSCH transmission in the slot are configured for uplink through tdd-UL-DL-ConfigurationCommon or tdd-UL-DL-ConfigurationDedicated.

Alt c. It means a slot that all symbols used for PUSCH transmission in the slot are composed of flexible or uplink symbols. For example, it means a slot in which all symbols used for PUSCH transmission in the slot are configured as a flexible or uplink through tdd-UL-DL-ConfigurationCommon or tdd-UL-DL-ConfigurationDedicated. In this case, the flexible symbol should not be a symbol through which the SS/PBCH block is transmitted.

A slot not available for PUSCH transmission or a not available slot may mean a slot that does not satisfy the above conditions.

To determine which slots are available, i.e., which symbols can be used for PUSCH transmission, only RRC configuration such as tdd-UL-DL-ConfigurationCommon or tdd-UL-DL-ConfigurationDedicated may be considered, and dynamic signaling may not be considered.

Or to determine which symbols can be used for PUSCH transmission, in addition to RRC configuration such as tdd-UL-DL-ConfigurationCommon or tdd-UL-DL-ConfigurationDedicated, dynamic signaling such as slot format indication by DCI format 2_0 may also be considered.

As time domain resource assignment (TDRA) of TBoMS, i) TDRA such as PUSCH repetition type A and ii) TDRA such as PUSCH repetition type B may be used.

TDRA such as PUSCH repetition type A (PUSCH repetition type A TDRA) is a resource allocation method in which the number of symbols allocated in each slot is the same, and TDRA such as PUSCH repetition type B (PUSCH repetition type B TDRA) means a resource allocation method in which the number of symbols allocated in each slot can be different.

PUSCH repetition type A TDRA (i.e., the same number of allocated symbols in each slot) has advantages in terms of design simplicity and unified DMRS allocation between slots.

In the PUSCH repetition type A TDRA, there is a case in which the UE cannot allocate all symbols of the uplink slot for PUSCH transmission even if the UE does not perform another uplink transmission in the uplink slot. One of the reasons is to avoid collision between PUSCH and SRS. Even if the SRS is not transmitted in every slot, the symbol resource to which the SRS is allocated for each PUSCH transmission slot cannot be used for PUSCH transmission.

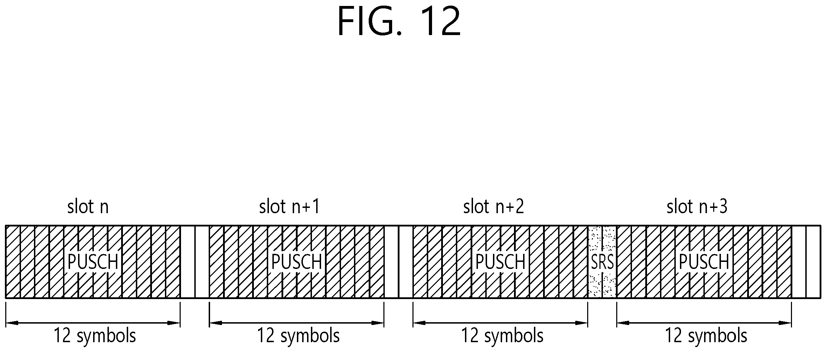

FIG. 12 illustrates a case in which all symbols of an uplink slot cannot be allocated for PUSCH transmission in a PUSCH repetition type A TDRA.

Referring to FIG. 12, SRS is actually transmitted through the last two symbols only in slot #n+2. However, in slots #n, #n+1, and #n+3, the last two symbols in the slot are not used for PUSCH transmission and are empty.

In order to use resources for TBoMS PUSCH transmission more efficiently while applying PUSCH repetition type A TDRA, it may be considered to perform symbol allocation that allows collision between TBoMS PUSCH and SRS.

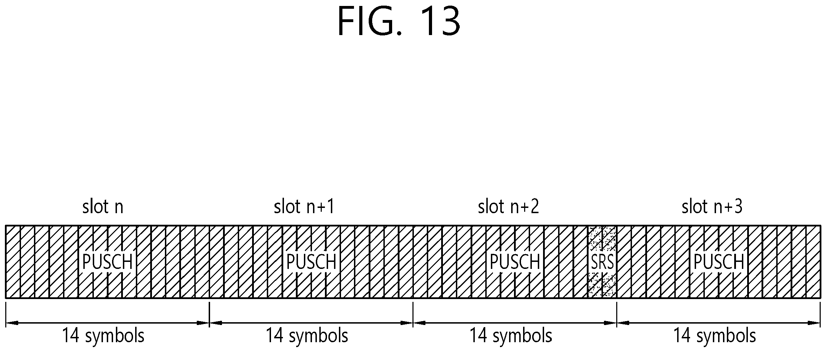

FIG. 13 illustrates symbol allocation allowing collision between TBoMS PUSCH and SRS in PUSCH repetition type A TDRA.

Referring to FIG. 13, even if SRS is allocated to slot #n+2, TBoMS PUSCH symbols may be allocated such that TBoMS PUSCH is transmitted in all symbols of slots #n, #n+1, and #n+3.

In this case, all uplink symbols of slots #n, #n+1, and #n+3 in which no SRS is transmitted may be used for TBoMS PUSCH transmission. However, collision between PUSCH and SRS resources occurs in slot #n+2, and in this case, it is necessary to define UE operation.

The present disclosure proposes a UE operation during a collision between a TBoMS PUSCH and another uplink transmission, including a collision between the TBoMS PUSCH and the SRS.

The contents of the present disclosure are described by taking TBoMS PUSCH transmission as an example for convenience of description, but this is not a limitation and can be applied to general PUSCH (repetition applied) transmission. This may be interpreted as slot resources to which one TB is mapped in the TBoMS PUSCH are a single slot. That is, the contents of the present disclosure may be applied to transmission of a general PUSCH in which one TB is transmitted in one slot as well as a TBoMS PUSCH in which one TB is transmitted over multiple slots.

<Collision with SRS>

An SRS resource that occupies adjacent OFDM symbols ($N_S \in \{1,2,4\}$) at an arbitrary symbol position in a slot, where all antenna ports of the SRS resource are mapped to each symbol of the resource, may be set to the UE by the higher layer parameter 'resourceMapping' of 'SRS-Resource'.

When SRS is set by higher layer parameter 'SRS-PosResourceSet-r16', the higher layer parameter 'resourceMapping' of 'SRS-PosResource-r16' can configure SRS resources that occupy adjacent symbols of $N_S \in \{1,2,4,8,12\}$ at an arbitrary position within a slot.

When an overlap, that is, a collision occurs between SRS transmission resources and PUSCH transmission resources, the UE may operate as follows.

If the PUSCH having a priority index 0 and the SRS configured by 'SRS-Resource' are to be transmitted in the same slot of the serving cell, the UE may be configured to transmit the SRS only after transmitting the PUSCH and the corresponding DM-RS.

If the PUSCH transmission having priority index 1 or the PUCCH transmission having priority index 1 overlaps in time with the SRS transmission on the serving cell, the UE does not transmit SRS in overlapping symbol(s).

In order to maximize the transmission resources of the TBoMS PUSCH, overlapping between the transmission resources of the TBoMS PUSCH and the SRS may be allowed. When overlapping between TBoMS PUSCH and transmission resources of SRS, the UE may operate as follows.

Method 1. The UE prioritizes transmission of TBoMS PUSCH over transmission of SRS. In symbol(s) in which the TBoMS PUSCH and the SRS overlap, the UE transmits the TBoMS PUSCH and does not transmit the SRS.

Method 2. The UE prioritizes SRS transmission over TBoMS PUSCH transmission. Specifically, the following methods may be used depending on a range of resources in which TBoMS PUSCH transmission is not to be performed.

Method 2-1. In all of TBoMS PUSCH transmission slot including symbol(s) in which TBoMS PUSCH and SRS overlap, the UE does not transmit TBoMS PUSCH but transmits SRS. When the TBoMS PUSCH is repeatedly transmitted, transmission of the TBoMS PUSCH is not performed and dropped/omitted only for the TBoMS PUSCH repetition including the overlapped resource. When using this method, the entire TBoMS PUSCH transmission is not performed due to collision between the TBoMS PUSCH and the SRS in some resources, which may be inefficient in terms of resource use.

Method 2-2. The UE transmits the SRS without transmitting the TBoMS PUSCH in a slot including symbol(s) in which the TBoMS PUSCH and the SRS overlap. In a slot including symbol(s) in which TBoMS PUSCH and SRS overlap, transmission of TBoMS PUSCH is punctured or rate-matched. When using this method, compared to the method 2-1, it is possible to obtain a benefit in terms of resource use by reducing resources not performing TBoMS PUSCH transmission.

Method 2-3. The UE does not transmit the TBoMS PUSCH and transmits the SRS in symbol (s) resources in which the TBoMS PUSCH and the SRS overlap. Transmission of the TBoMS PUSCH is punctured or rate-matched in symbol (s) resources in which TBoMS PUSCH and SRS overlap. When using this method, compared to methods 2-1 and 2-2, resources not performing TBoMS PUSCH transmission can be further reduced to obtain a benefit in terms of resource use.

When overlapping between TBoMS PUSCH and transmission resources of SRS, the UE may apply other methods depending on circumstances. A plurality of methods among the methods below may be applied together.

Different methods may be applied according to the priority index of TBoMS PUSCH transmission. For example, when TBoMS PUSCH transmission has priority index 1, method 1 is applied. That is, the UE transmits the TBoMS PUSCH in symbol(s) in which the TBoMS PUSCH and the SRS overlap, and does not transmit the SRS. On the other hand, when TBoMS PUSCH transmission has a priority index 0, method 2 (method 2-1, 2-2, or 2-3) is applied by prioritizing SRS transmission over TBoMS PUSCH transmission. At this time, the priority index of the TBoMS PUSCH may be indicated through a DCI scheduling the corresponding PUSCH.

Different methods may be applied depending on whether SRS and DMRS of TBoMS PUSCH overlap. When overlapping between SRS and TBoMS PUSCH, the overlapped symbol may include a PUSCH DMRS symbol. In this case, when method 2-3 is applied, the base station (gNB) may not be able to perform channel estimation through DMRS, or channel estimation performance may be degraded. Considering this, the UE may operate as follows.

Alt a) When overlapping occurs between transmission resources of SRS and TBoMS PUSCH in a specific slot, method 2-2 is applied when SRS transmission symbol resources overlap with at least one PUSCH DMRS symbol resource. Otherwise, the method 2-3 above is applied.

Alt b) When overlapping occurs between transmission resources of SRS and TBoMS PUSCH in a specific slot, method 2-2 is applied when SRS transmission symbol resources overlap with all PUSCH DMRS symbol resources. Otherwise, the method 2-3 above is applied.

Alt c) Considering that SRS is mainly transmitted using slot resources located at the end of the slot, when overlapping occurs between transmission resources of SRS and TBoMS PUSCH in a specific slot, method 2-2 is applied when SRS transmission symbol resources overlap with front load DMRS symbol resources. Otherwise, the method 2-3 above is applied.

In the above methods, when each PUSCH DMRS is a double-symbol DMRS consisting of two consecutive symbols, if the SRS transmission resource overlaps with at least one DMRS symbol, it is determined that overlap between the corresponding DMRS symbol resource and the SRS symbol resource has occurred.

Considering that PUSCH transmission is allowed only through consecutive symbol resources within a slot, different methods may be applied according to the location of symbol resources where overlap between the TBoMS PUSCH and the SRS occurs.

When overlap between transmission resources of SRS and TBoMS PUSCH occurs in a specific slot, if the overlapped symbol resource consists of one or a plurality of symbol(s) from the first symbol of the PUSCH transmission resource or one or a plurality of symbol(s) from the last symbol of the PUSCH transmission resource, method 2-3 above is applied. Otherwise (i.e., when the overlapped symbol does not include both the first symbol and the last symbol of the PUSCH transmission resource), method 2-2 is applied.

<URLLC PUSCH>

During transmission of TBoMS PUSCH, transmission of URLLC PUSCH having priority may be scheduled. In this case, transmission of URLLC PUSCH needs to be prioritized over transmission of TBoMS PUSCH. In this case, the UE prioritizes transmission of the SRS over transmission of the TBoMS PUSCH in the overlapped resources. Specifically, there may be the following methods depending on the range of resources not performing TBoMS PUSCH transmission.

Method 1. The UE performs URLLC PUSCH transmission without transmitting TBoMS PUSCH in all of the TBoMS PUSCH transmission slot including symbol(s) in which TBoMS PUSCH and SRS overlap. When the TBoMS PUSCH is repeatedly transmitted, transmission of the TBoMS PUSCH is not performed and dropped/omitted only for the TBoMS PUSCH repetition including the overlapped resource. When using this method, the entire TBoMS PUSCH transmission is not performed due to collision between the TBoMS PUSCH and the URLLC PUSCH in some resources, resulting in inefficiency in terms of resource use.

Method 2. The UE transmits URLLC PUSCH without transmitting TBoMS PUSCH in a slot including symbol(s) in which TBoMS PUSCH and URLLC PUSCH overlap. Transmission of the TBoMS PUSCH is punctured or rate matched in a slot including symbol(s) in which TBoMS PUSCH and URLLC PUSCH overlap. When using this method, compared to the method 1, it is possible to obtain a benefit in terms of resource use by reducing resources not performing TBoMS PUSCH transmission.

Method 3. The UE transmits the URLLC PUSCH without transmitting the TBoMS PUSCH in the symbol (s) resource in which the TBoMS PUSCH and the URLLC PUSCH overlap. Transmission of TBoMS PUSCH is punctured or rate matched in symbol (s) resources in which TBoMS PUSCH and URLLC PUSCH overlap. When using this method, compared to methods 1 and 2, it is possible to obtain a benefit in terms of resource use by reducing resources not performing TBoMS PUSCH transmission.

When overlapping between TBoMS PUSCH and transmission resources of SRS, the UE may apply other methods depending on circumstances. A plurality of methods among the methods below may be applied together.

Different methods may be applied depending on whether URLLC PUSCH and TBoMS PUSCH overlap with DMRS. When overlapping between URLLC PUSCH and TBoMS PUSCH, the overlapped symbol may include a PUSCH DMRS symbol. In this case, if method 3 is applied, the base station may not be able to perform channel estimation through DMRS, or channel estimation performance may deteriorate. Considering this, the UE may operate as follows.

Alt a) When overlapping occurs between transmission resources of URLLC PUSCH and TBoMS PUSCH in a specific slot, method 2 is applied when URLLC PUSCH transmission symbol resources overlap with at least one PUSCH DMRS symbol resource. Otherwise, method 3 above is applied.

Alt b) When an overlap occurs between transmission resources of URLLC PUSCH and TBoMS PUSCH in a specific slot, method 2 is applied when URLLC PUSCH transmission symbol resources overlap with all PUSCH DMRS symbol resources. Otherwise, method 3 above is applied.

In the above methods, when each PUSCH DMRS is a double-symbol DMRS consisting of two consecutive symbols, if the URLLC PUSCH transmission resource overlaps with at least one DMRS symbol, it is determined that overlap between the corresponding DMRS symbol resource and the URLLC PUSCH symbol resource has occurred.

Considering that PUSCH transmission is allowed only through consecutive symbol resources within a slot, different methods may be applied according to the location of symbol resources where overlap between TBoMS PUSCH and URLLC PUSCH occurs.

When overlapping occurs between transmission resources of URLLC PUSCH and TBoMS PUSCH in a specific slot, if the overlapped symbol resource consists of one or a plurality of symbol(s) from the first symbol of the TBoMS PUSCH transmission resource or one or a plurality of symbol(s) from the last symbol of the TBoMS PUSCH transmission resource, method 3 is applied. Otherwise (i.e., when the overlapped symbol does not include both the first symbol and the last symbol of the TBoMS PUSCH transmission resource), method 2 is applied.

<Collision with invalid symbol pattern>

The base station may consider setting the specific symbol resource not to be used by the UE for TBoMS PUSCH transmission in order to use the specific symbol resource for other purposes. For example, in order to receive an SRS from another UE, some of TBoMS PUSCH transmission resources may be set as symbol resources not used for PUSCH transmission.

This invalid symbol pattern may be the same as a pattern set by a higher layer signal (invalidSymbolPattern). Such an invalid symbol pattern may be set to the UE through RRC. Additionally, whether or not such an invalid symbol pattern is valid/applicable may be indicated through DCI scheduling the TBoMS PUSCH.

When the transmission symbol resource of TBoMS PUSCH overlaps with the symbol resource included in this invalid symbol pattern, the UE should not use the corresponding symbol resource for TBoMS PUSCH transmission. To this end, in detail, the UE may operate as follows.

Method 1. When the TBoMS PUSCH and the symbol resource included in the invalid symbol pattern overlap, the UE does not transmit the TBoMS PUSCH in all of the TBoMS PUSCH transmission slot including the overlapped symbol(s). When the TBoMS PUSCH is repeatedly transmitted, transmission of the TBoMS PUSCH is not performed and dropped/omitted only for the TBoMS PUSCH repetition including the overlapped resource. When using this method, the entire TBoMS PUSCH transmission is not performed due to overlap in some resources of the TBoMS PUSCH transmission, resulting in inefficiency in terms of resource use.

Method 2. When the TBoMS PUSCH and the symbol resource included in the invalid symbol pattern overlap, the UE does not transmit the TBoMS PUSCH in the slot including the overlapped symbol(s). Transmission of the TBoMS PUSCH in a slot including the corresponding overlapped symbol(s) is punctured or rate matched. When using this method, compared to the method 1, it is possible to obtain a benefit in terms of resource use by reducing resources not performing TBoMS PUSCH transmission.

Method 3. When TBoMS PUSCH and symbol resources included in invalid symbol pattern overlap, the UE does not transmit TBoMS PUSCH in the overlapped symbol(s) resources. Transmission of the TBoMS PUSCH in the overlapped symbol(s) resource is punctured or rate matched. When using this method, compared to methods 1 and 2, it is possible to obtain a benefit in terms of resource use by reducing resources not performing TBoMS PUSCH transmission.

When overlapping between the TBoMS PUSCH and the symbol resources included in the invalid symbol pattern, the UE may apply other methods according to circumstances. A plurality of methods among the methods below may be applied together.

Different methods may be applied depending on whether the symbol resources included in the invalid symbol pattern overlap with the DMRS of the TBoMS PUSCH. When symbol resources included in invalid symbol pattern overlap with TBoMS PUSCH, the overlapped symbols may include PUSCH DMRS symbols. At this time, if method 3 is applied, the base station may not be able to perform channel estimation through DMRS, or channel estimation performance may be degraded. Considering this, the UE may operate as follows.

Alt a) When overlap occurs between symbol resources included in the invalid symbol pattern and TBoMS PUSCH transmission resources in a specific slot, method 2 is applied when a symbol resource included in an invalid symbol pattern overlaps with at least one PUSCH DMRS symbol resource. Otherwise, method 3 above is applied.

Alt b) When overlap occurs between symbol resources included in the invalid symbol pattern and TBoMS PUSCH transmission resources in a specific slot, method 2 is applied when symbol resources included in invalid symbol pattern overlap with all PUSCH DMRS symbol resources. Otherwise, method 3 above is applied.

In the above methods, when each PUSCH DMRS is a double-symbol DMRS composed of two consecutive symbols, if the symbol resource included in the invalid symbol pattern overlaps with at least one DMRS symbol, it is determined that overlap between the corresponding DMRS symbol resource and the symbol resource included in the invalid symbol pattern has occurred.

Considering that PUSCH transmission is allowed only through consecutive symbol resources within a slot, different methods may be applied according to the location of symbol resources where overlap between TBoMS PUSCH and symbol resources included in invalid symbol pattern occurs.

When overlap occurs between symbol resources included in the invalid symbol pattern and TBoMS PUSCH transmission resources in a specific slot, if the overlapped symbol resource consists of one or a plurality of symbol(s) from the first symbol of the TBoMS PUSCH transmission resource or one or a plurality of symbol(s) from the last symbol of the TBoMS PUSCH transmission resource, method 3 is applied. Otherwise (i.e., when the overlapped symbol does not include both the first symbol and the last symbol of the TBoMS PUSCH transmission resource), method 2 is applied.

The above suggestions can be equally applied even to transmission of a PUSCH to which TBoMS is not applied. In this case, it is the same as the case where the length of the TBoMS PUSCH (i.e., the length of a slot to which one PUSCH TB is mapped) is 1.

<Determination/judgment of available slots>

When transmitting the TBoMS PUSCH, it may be considered that transmission is configured/defined/performed based on available slots.

If a slot is determined to be available for a scheduled PUSCH, that slot is counted in PUSCH repetitions. Otherwise, the slot is not counted in the PUSCH repetition and the repetition is postponed to the next slot.

Alt 1: The above step can be repeated until the counting result reaches the configured/indicated repetition number.

Alt 2: The above step may be repeated until the counting result reaches the configured/indicated repetition number N or until the PUSCH transmission period is K slots and the counting result is not greater than N.

Considering whether the determination of all available slots should be performed prior to the first actual transmission of a repetition, it may operate according to one of the following methods.

Alt1: Whether the slot is determined to be available for UL transmission is determined depending on RRC settings (e.g., tdd_ul_dl setting) and not dependent on dynamic signaling (e.g., SFI, CI, PUSCH priority for URLLC, etc.).

For example, in addition to tdd-UL-DL-ConfigurationCommon and tdd-UL-DL-ConfigurationDedicated, ssb-PositionsInBurst for the SS/PBCH block may be used to determine available slots.

Alt2: Whether a slot is determined to be available for UL transmission depends on RRC settings (e.g., tdd_ul_dl settings) and dynamic signaling (e.g., SFI, CI, PUSCH priority for URLLC, etc.).

Determination of all available slots may have to be performed before the first actual transmission of an repetition. Alternatively, the determination of all available slots need not be performed prior to the first actual transmission of an repetition, and may be determined differently per repetition.

In a specific PUSCH transmission slot, if the following resources are included in the symbol resources configured for PUSCH transmission, it is proposed to determine the corresponding slot as a slot not available for PUSCH transmission. PUSCH transmission in the corresponding slot is postponed, and the corresponding slot is not counted in the number of slots used for PUSCH transmission.

If PUSCH transmission is not performed due to a collision with PUCCH transmission, the corresponding slot may be determined to be a slot unavailable for PUSCH transmission if a specific condition is satisfied. For example, only when PUSCH transmission is not performed due to PUCCH through which periodic CSI is transmitted, the corresponding slot is determined as an unavailable slot for PUSCH transmission. If PUSCH transmission is not performed due to other PUCCH transmission, the corresponding slot may be determined as a slot available for PUSCH transmission even if PUSCH transmission is not performed.

This is to maintain commonality in the understandings of the base station and the UE about available slots (i.e., to prevent misunderstanding). Whether to transmit PUCCH may be dynamically determined according to the needs or circumstances of the UE (e.g., PUCCH transmission for SR transmission), and it is not desirable that such PUCCH transmission affect slot availability. That is, the UE determines a specific slot as an unavailable slot, whereas the base station determines the specific slot as an available slot.

If PUSCH transmission is not performed due to a collision with SRS transmission, the corresponding slot is determined to be a slot unavailable for PUSCH transmission.

If PUSCH transmission is not performed due to a collision with URLLC PUSCH transmission, the corresponding slot is determined to be an unavailable slot for PUSCH transmission.

If PUSCH transmission is not performed due to a collision with an invalid symbol indicated by the setting of the base station, the corresponding slot is determined as an unavailable slot for PUSCH transmission.

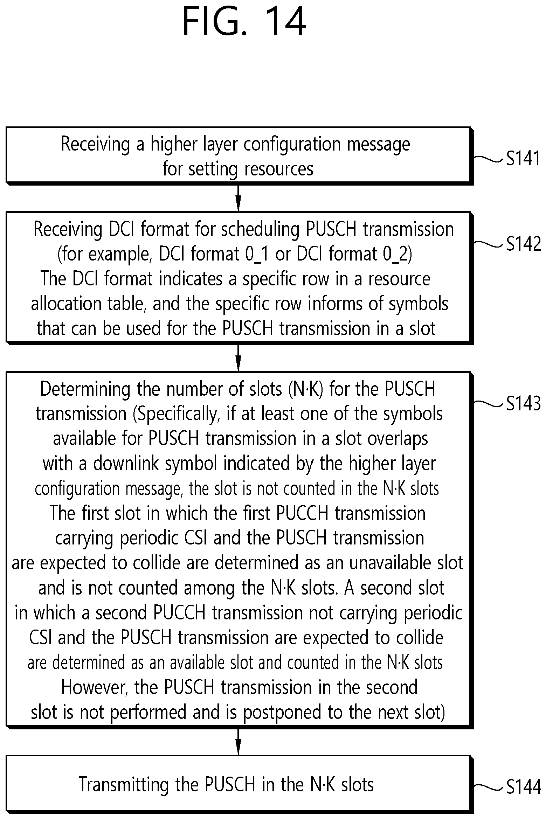

FIG. 14 illustrates a PUSCH transmission method of a UE according to an embodiment of the present disclosure.

Referring to FIG. 14, the UE receives a higher layer configuration message for setting resources (S141).

The higher layer configuration message includes at least one of cell-specific time division duplex (TDD) uplink/downlink (UL/DL) configuration (e.g., tdd-UL-DL-ConfigurationCommon), UE-specific TDD UL/DL configuration (e.g., tdd-UL-DL-ConfigurationDedicated) and SSB position setting (e.g., ssb-PositionsInBurst) indicating a time domain position at which the synchronization signal block is transmitted.

The UE receives downlink control information (DCI) format for scheduling PUSCH transmission (S142). The DCI format may be, for example, DCI format 0_1 used for scheduling one or a plurality of PUSCHs in one cell and DCI format 0_2 used for scheduling PUSCHs in one cell.

The DCI format indicates a specific row in a resource allocation table, and the specific row informs symbols that can be used for the PUSCH transmission in a slot.

The DCI format includes, for example, a time domain resource assignment (TDRA) field, and the value of the TDRA field may indicate the specific row (for example, if the value of the TDRA field is m, it indicates row index m+1 of the resource allocation table).

The following table illustrates a resource allocation table for the case of a normal CP.

[Table 5]

| Row index | PUSCH mapping type | $K_2$ | S | L |
|---|---|---|---|---|
| 1 | Type A | $j$ | 0 | 14 |
| 2 | Type A | $j$ | 0 | 12 |
| 3 | Type A | $j$ | 0 | 10 |
| 4 | Type B | $j$ | 2 | 10 |
| 5 | Type B | $j$ | 4 | 10 |
| 6 | Type B | $j$ | 4 | 8 |

(continued)

| Row index | PUSCH mapping type | $K_2$ | S | L |
|---|---|---|---|---|
| 7 | Type B | $j$ | 4 | 6 |
| 8 | Type A | $j+1$ | 0 | 14 |
| 9 | Type A | $j+1$ | 0 | 12 |
| 10 | Type A | $j+1$ | 0 | 10 |
| 11 | Type A | $j+2$ | 0 | 14 |
| 12 | Type A | $j+2$ | 0 | 12 |
| 13 | Type A | $j+2$ | 0 | 10 |
| 14 | Type B | $j$ | 8 | 6 |
| 15 | Type A | $j+3$ | 0 | 14 |
| 16 | Type A | $j+3$ | 0 | 10 |

Each row of the resource allocation table may inform the slot offset between DCI and PUSCH ($K_2$, $K_2$ may be indicated as K2), the start symbol (S) and allocation length (L) of the PUSCH, the mapping type of the PUSCH, etc.

Although not shown in the table, each row may also inform information on the number of slots used for multi-slot TB mapping (this can be expressed as the number of slots of TBoMS and can also be referred to as the number of slots used for TBS determination, which can be expressed as N or Z) and the number of repetitions (K) to be applied to the PUSCH transmission.

The UE determines the number of slots (N·K) for the PUSCH transmission (S143). Here, N and K are each natural numbers.

Specifically, if at least one of the symbols available for PUSCH transmission in a slot overlaps with a downlink symbol indicated by the higher layer configuration message, the slot is not counted in the N·K slots.

The first slot in which the first PUCCH transmission carrying periodic channel state information (CSI) and the PUSCH transmission are expected to collide are determined as an unavailable slot and is not counted among the N·K slots.

A second slot in which a second PUCCH transmission not carrying periodic CSI and the PUSCH transmission are expected to collide is determined as an available slot and counted in the N·K slots. However, the PUSCH transmission in the second slot is not performed and is postponed to the next slot.

According to this method, repeated PUSCH transmissions can be set/defined based on available slots, and at this time, there is no ambiguity in repeated PUSCH transmissions because misunderstanding about available slots does not occur between the network and the UE. For example, a slot carrying periodic CSI is preconfigured and there is a low possibility of misunderstanding between the network and the UE. Accordingly, a PUSCH transmission slot colliding with a PUCCH transmission carrying periodic CSI is determined as an unavailable slot. On the other hand, a PUSCH transmission slot that collides with a PUCCH transmission (PUCCH transmission for SR transmission) dynamically determined according to the needs or circumstances of the UE is determined as an available slot even though PUSCH transmission is not actually performed. Through this, misunderstanding about available slots between the network and the UE is prevented from occurring. In addition, since repeated PUSCH transmission can be performed using as many slots as possible, it is helpful to improve coverage.

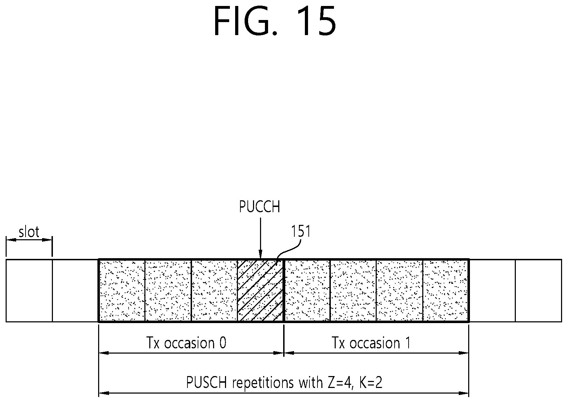

FIG. 15 illustrates a case where PUSCH transmission and PUCCH transmission collide.

Referring to FIG. 15, a TB of PUSCH may be mapped through Z=4 slots and transmitted repeatedly K=2 times in total. At this time, PUCCH transmission may be scheduled to collide in the fourth slot 151 of PUSCH transmission occasion #0.

In this case, PUSCH transmission is not performed in the slot 151. And, depending on whether or not the PUCCH transmission is a PUCCH carrying periodic CSI, determining whether the slot 151 is an unavailable slot depends on it. That is, if the PUCCH transmission is the first PUCCH transmission carrying periodic CSI, the slot 151 is determined as an unavailable slot. If the PUCCH transmission is the second PUCCH transmission not carrying periodic CSI, the slot 151 is determined as an available slot, but PUSCH transmission is not performed in the slot 151 and is postponed to the next slot.

Referring back to FIG. 14, the third slot in which SRS (sounding reference signal) transmission and the PUSCH transmission are expected to collide is determined as an unavailable slot and is not counted among the N·K slots.

The fourth slot in which URLLC (Ultra-Reliable and Low Latency Communications) PUSCH transmission and the PUSCH transmission are expected to collide is determined as an unavailable slot and is not counted among the N·K slots.

The UE transmits the PUSCH in the N-K slots (S 144). As mentioned above, Z may be N (Z=N). That is, the N·K slots may be expressed as Z-K slots.

The PUSCH may be a repetition type A PUSCH that is repeatedly transmitted in the same starting symbol position and the same number of PUSCH transmission symbols in each of the N·K slots.

Alternatively, the PUSCH may be a TB processing over multiple slots (TBoMS) PUSCH that processes and transmits one transport block over N (or N-K) slots.

Alternatively, the PUSCH may be a repetition type A PUSCH scheduled by RAR UL grant.

Alternatively, the PUSCH may be a repetition type A PUSCH scheduled by DCI format 0_0 having a CRC scrambled by TC-RNTI.

The summary of the above is as follows.

For unpaired spectrum, when AvailableSlotCounting is enabled, based on tdd-UL-DL-ConfigurationCommon, tdd-UL-DL-ConfigurationDedicated and ssb-PositionsInBurst, TDRA field value (TDRA information field value) of DCI format 0_1 or 0_2, the UE determines N-K slots for PUSCH transmission of PUSCH repetition type A scheduled by DCI format 0_1 or 0_2.

In the number of N·K slots for PUSCH transmission of PUSCH repetition type A scheduled by DCI format 0_1 or 0_2, a slot in which at least one of the symbols indicated by the indexed row of the resource allocation table overlaps with a downlink symbol indicated by tdd-UL-DL-ConfigurationCommon or tdd-UL-DL-ConfigurationDedicated or a symbol of an SS/PBCH block having an index provided by ssb-PositionsInBurst is not counted.

Otherwise, the UE determines N·K consecutive slots for PUSCH transmission of PUSCH repetition type A scheduled by DCI format 0_1 or 0_2 based on the TDRA field value of DCI format 0_1 or 0_2.

The UE determines N·K slots for TBoMS PUSCH transmission based on tdd-UL-DL-ConfigurationCommon, tdd-UL-DL-ConfigurationDedicated, ssb-PositionsInBurst, and TDRA field values of DCI format 0_1 or 0_2.

In the number of N·K slots for TBoMS PUSCH transmission, a slot in which at least one of the symbols indicated by the indexed row of the resource allocation table overlaps with a downlink symbol indicated by tdd-UL-DL-ConfigurationCommon or tdd-UL-DL-ConfigurationDedicated or a symbol of SS/PBCH block having an index provided by ssb-PositionsInBurst is not counted.

Based on the tdd-UL-DL-ConfigurationCommon and ssb-PositionsInBurst and the value of the TDRA field in the Random Access Response (RAR) UL grant, the UE determines N-K slots for PUSCH transmission of PUSCH repetition type A scheduled by the RAR UL grant.

In the number of N·K slots for PUSCH transmission of PUSCH repetition type A scheduled by the RAR UL grant, a slot in which at least one of the symbols indicated by the indexed row of the resource allocation table overlaps with a downlink symbol indicated by tdd-UL-DL-ConfigurationCommon or a symbol of an SS/PBCH block having an index provided by ssb-PositionsInBurst is not counted.

Based on tdd-UL-DL-ConfigurationCommon and ssb-PositionsInBurst and TDRA information field values of DCI scheduling PUSCH, the UE determines N·K slots for PUSCH transmission of PUSCH repetition type A scheduled by DCI format 0_0 having a CRC scrambled by TC-RNTI.

In the number of N·K slots for PUSCH transmission of PUSCH repetition type A scheduled by DCI format 0_0 with CRC scrambled by TC-RNTI, a slot in which at least one of the symbols indicated by the indexed row of the resource allocation table overlaps with a downlink symbol indicated by tdd-UL-DL-ConfigurationCommon or a symbol of an SS/PBCH block having an index provided by ssb-PositionsInBurst is not counted.

In the case of paired spectrum (for paired spectrum), based on the value of the TDRA information field of DCI format 0_1 or 0_2, the UE determines N·K consecutive slots for PUSCH transmission of PUSCH repetition type A scheduled by DCI format 0_1 or 0_2 or TBoMS PUSCH transmission scheduled by DCI format 0_1 or 0_2.

A half-duplex UE having a reduced function in which AvailableSlotCounting is activated determines N·K slots for PUSCH transmission of PUSCH repetition type A scheduled by DCI format 0_1 or 0_2 or TBoMS PUSCH transmission scheduled by DCI format 0_1 or 0_2 based on the TDRA information field value of DCI format 0_1 or 0_2.

In the number of N·K slots, a slot in which at least one of the symbols indicated by the indexed row of the resource allocation table overlaps with a symbol of an SS/PBCH block having an index provided by ssb-PositionsInBurst is not counted.

The UE determines N·K consecutive slots for PUSCH transmission of PUSCH repetition type A scheduled by the RAR UL grant based on the value of the TDRA information field in the RAR UL grant.

Based on the TDRA information field value in the DCI scheduling the PUSCH, the UE determines N·K consecutive slots for PUSCH transmission of PUSCH repetition type A scheduled by DCI format 0_0 with CRC scrambled by TC-RNTI.

That is, if availableSlotCounting is activated in an unpaired spectrum, an available slot-based slot counting method is applied, and otherwise, an existing consecutive physical slot-based slot counting method is applied.

In the slot counting method based on available slots, if at least one PUSCH transmission symbol in a specific slot overlaps with the downlink symbol indicated by tdd-UL-DL-ConfigurationCommon or tdd-UL-DL-ConfigurationDedicated, or a symbol of an SS/PBCH block having an index provided by ssb-PositionsInBurst, the specific slot is determined not to be an available slot and is excluded from slot counting for repetition, that is, N·K slot counting.

Since all slots can be used for uplink in a paired spectrum, only the existing consecutive physical slot-based slot counting method is applied. However, in the case of a half-duplex-FDD (HD-FDD) UE with limited capabilities (RedCap), it is possible to perform an uplink operation in all slots, but only one of a downlink operation and an uplink operation can be performed in one slot. Therefore, when availableSlotCounting is activated, a slot counting method based on available slots is applied. In this case, if at least one PUSCH transmission symbol in a specific slot overlaps with a symbol of an SS/PBCH block having an index provided by ssb-PositionsInBurst, the specific slot is determined not to be an available slot, and is excluded from slot counting for repetition, that is, N·K slot counting.

In the above-described N·K slot counting process, if at least one of the symbols available for PUSCH transmission in the slot overlaps with the downlink symbol indicated by the higher layer configuration message, the slot is not counted in the N·K slots. In addition, a first slot in which a first PUCCH transmission carrying periodic CSI and the PUSCH transmission are expected to collide is determined as an unavailable slot and is not counted among the N·K slots. A second slot in which a second PUCCH transmission not carrying periodic CSI and the PUSCH transmission are expected to collide is determined as an available slot and is counted in the N·K slots. However, the PUSCH transmission in the second slot is not performed and is postponed to the next slot.

In the case of an unpaired spectrum, the UE determines $N^{repeat}_{PUCCH}$ slots for PUCCH transmission starting from the slot indicated to the UE. $N^{repeat}_{PUCCH}$ slots have i) an uplink symbol, or ii) a flexible symbol other than the SS/PBCH block symbol provided by startingSymbolIndex as the first symbol in PUCCH-format 1, PUCCH-format 3, or PUCCH-format 4, and iii) consecutive uplink symbols, or iv) flexible symbols that are not SS/PBCH block symbols greater than or equal to the number of symbols provided by nrofsymbols starting from the first symbol in PUCCH-format 1, PUCCH-format 3, or PUCCH-format 4.

In the case of a paired spectrum, the UE determines $N^{repeat}_{PUCCH}$ slots for PUCCH transmission as consecutive $N^{repeat}_{PUCCH}$ slots starting from the slot indicated to the UE.

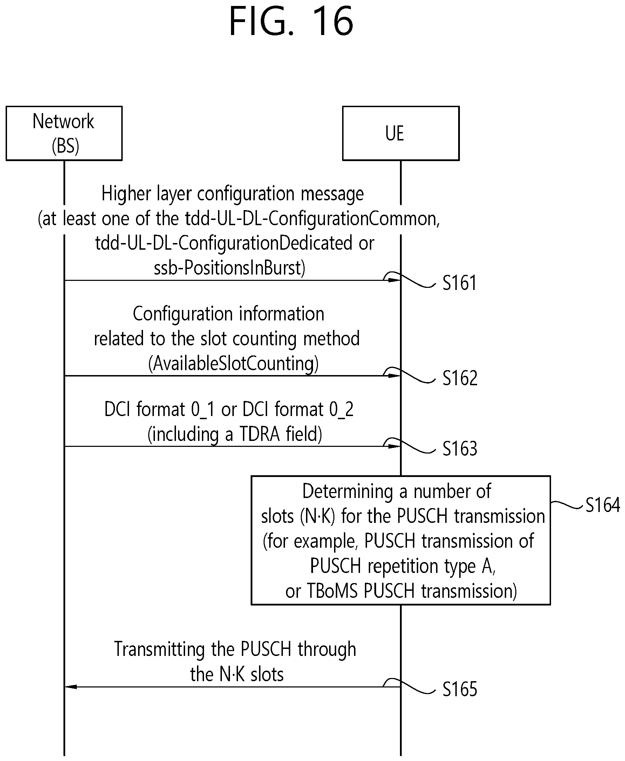

FIG. 16 illustrates a signaling process between a network and a UE according to an embodiment of the present disclosure.

Referring to FIG. 16, the network (base station) transmits a higher layer configuration message for setting resources to the UE (S161).

The higher layer configuration message may include at least one of the aforementioned tdd-UL-DL-ConfigurationCommon, tdd-UL-DL-ConfigurationDedicated, and ssb-PositionsInBurst.

The network transmits configuration information (AvailableSlotCounting) related to the slot counting method to the UE (S 162). If AvailableSlotCounting is enabled, the UE applies the counting method based on available slots as described in the present disclosure, and otherwise performs counting based on consecutive physical slots as in the prior art.

The network transmits a DCI format for scheduling PUSCH transmission to the UE (S163). The DCI format may be, for example, DCI format 0_1 or DCI format 0_2. The DCI format may include a TDRA field, and a value of the TDRA field may indicate a specific row of a resource allocation table which is used (for example, if the value of the TDRA field is m, it indicates row index m+1 of the resource allocation table).

The UE determines a number of slots (N·K) for the PUSCH transmission (S 164). For example, the UE may determine the number of slots (N·K) for the PUSCH transmission based on the higher layer configuration message and the DCI format. Alternatively, UE may determine the number of slots (N·K) for the PUSCH transmission only with a higher layer configuration message.

Which slots are not counted or counted in the N·K slots have already been described in detail with reference to FIG. 14.

The UE transmits the PUSCH to the network through the N·K slots (S165).

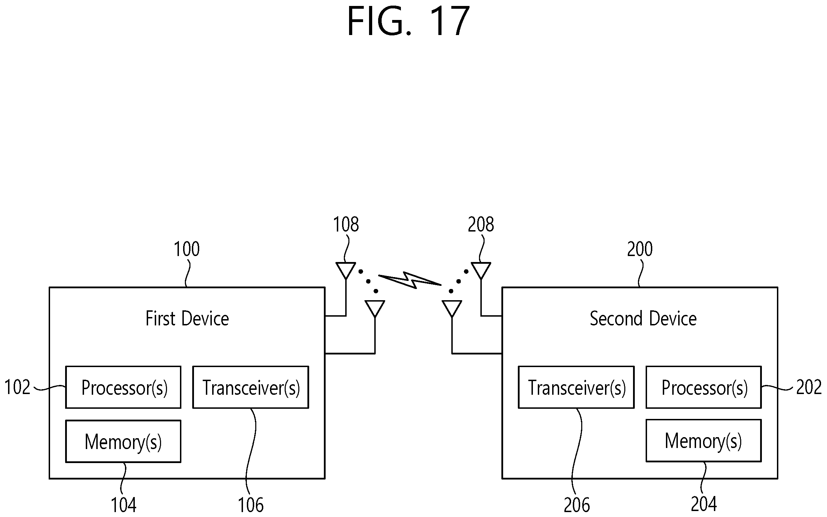

FIG. 17 illustrates a wireless device applicable to this specification.

Referring to FIG. 17, the first wireless device 100 and the second wireless device 200 may transmit/receive wireless signals through various wireless access technologies (e.g., LTE, NR).

The first wireless device 100 includes at least one processor 102 and at least one memory 104 and may further include at least one transceiver 106 and/or at least one antenna 108. The processor 102 may be configured to control the memory 104 and/or the transceiver 106 and to implement the descriptions, functions, procedures, proposals, methods, and/or operational flowcharts disclosed herein. For example, the processor 102 may process information in the memory 104 to generate first information/signal and may then transmit a radio signal including the first information/signal through the transceiver 106. In addition, the processor 102 may receive a radio signal including second information/signal through the transceiver 106 and may store information obtained from signal processing of the second information/signal in the memory 104. The memory 104 may be connected to the processor 102 and may store various pieces of information related to the operation of the processor 102. For example, the memory 104 may store a software code including instructions to perform some or all of processes controlled by the processor 102 or to perform the descriptions, functions, procedures, proposals, methods, and/or operational flowcharts disclosed herein. Here, the processor 102 and the memory 104 may be part of a communication modem/circuit/chip designed to implement a radio communication technology (e.g., LTE or NR). The transceiver 106 may be connected with the processor 102 and may transmit and/or receive a radio signal via the at least one antennas 108. The transceiver 106 may include a transmitter and/or a receiver. The transceiver 106 may be replaced with a radio frequency (RF) unit. In this specification, the wireless device may refer to a communication modem/circuit/chip.

The first wireless device 100 may be a UE. The first wireless device 100 receives a higher layer configuration message for configuring resources and receives a DCI format for scheduling the PUSCH transmission. The DCI format indicates a specific row in a resource allocation table, and the specific row informs symbols that can be used for the PUSCH transmission in a slot. The first wireless device 100 determines the number of slots (N-K) for transmitting the PUSCH, where N and K are natural numbers, respectively, and transmits the PUSCH in the N·K slots. Here, if at least one of the symbols available for PUSCH transmission in the slot overlaps with a downlink symbol indicated by the higher layer configuration message, the slot is not counted in the N·K slots. The first slot in which the first PUCCH transmission carrying periodic channel state information (CSI) and the PUSCH transmission are expected to collide is determined as an unavailable slot and not counted in the N·K slots. A second slot in which a second PUCCH transmission that does not carry periodic CSI and the PUSCH transmission are expected to collide is determined as an available slot and counted in the N·K slots, and the PUSCH transmission in the second slot is postponed to the next slot.

The second wireless device 200 includes at least one processor 202 and at least one memory 204 and may further include at least one transceiver 206 and/or at least one antenna 208. The processor 202 may be configured to control the memory 204 and/or the transceiver 206 and to implement the descriptions, functions, procedures, proposals, methods, and/or operational flowcharts disclosed herein. For example, the processor 202 may process information in the memory 204 to generate third information/signal and may then transmit a radio signal including the third information/signal through the transceiver 206. In addition, the processor 202 may receive a radio signal including fourth information/signal through the transceiver 206 and may store information obtained from signal processing of the fourth information/signal in the memory 204. The memory 204 may be connected to the processor 202 and may store various pieces of information related to the operation of the processor 202. For example, the memory 204 may store a software code including instructions to perform some or all of processes controlled by the processor 202 or to perform the descriptions, functions, procedures, proposals, methods, and/or operational flowcharts disclosed herein. Here, the processor 202 and the memory 204 may be part of a communication modem/circuit/chip designed to implement a radio communication technology (e.g., LTE or NR). The transceiver 206 may be connected with the processor 202 and may transmit and/or receive a radio signal via the at least one antennas 208. The transceiver 206 may include a transmitter and/or a receiver. The transceiver 206 may be replaced with an RF unit. In this specification, the wireless device may refer to a communication modem/circuit/chip.

The second wireless device 200 may be a base station. The second wireless device 200 transmits a higher layer configuration message for configuring resources to the UE, and transmits a DCI format for scheduling the PUSCH transmission to the UE. The DCI format indicates a specific row in the resource allocation table, and the specific row informs symbols that can be used for the PUSCH transmission in a slot. The second wireless device 200 receives the PUSCH from the UE in N·K (N, K is a natural number) slots. If at least one of the symbols available for PUSCH transmission in the slot overlaps with a downlink symbol indicated by the higher layer configuration message, the slot is not counted in the N·K slots. The first slot in which the first PUCCH transmission carrying periodic channel state information (CSI) and the PUSCH transmission are expected to collide is determined as an unavailable slot and are not counted in the N·K slots. A second slot in which a second PUCCH transmission not carrying periodic CSI and the PUSCH transmission are expected to collide is determined as an available slot and counted in the N·K slots, and it may be assumed that the PUSCH reception in the second slot is postponed to the next slot.

Hereinafter, hardware elements of the wireless devices 100 and 200 are described in detail. At least one protocol layer may be implemented, but limited to, by the at least one processor 102 and 202. For example, the at least one processor 102 and 202 may implement at least one layer (e.g., a functional layer, such as PHY, MAC, RLC, PDCP, RRC, and SDAP layers). The at least one processor 102 and 202 may generate at least one protocol data unit (PDU) and/or at least one service data unit (SDU) according to the descriptions, functions, procedures, proposals, methods, and/or operational flowcharts disclosed herein. The at least one processor 102 and 202 may generate a message, control information, data, or information according to the descriptions, functions, procedures, proposals, methods, and/or operational flowcharts disclosed herein. The at least one processor 102 and 202 may generate a signal (e.g., a baseband signal) including a PDU, an SDU, a message, control information, data, or information according to the functions, procedures, proposals, and/or methods disclosed herein and may provide the signal to the at least one transceiver 106 and 206. The at least one processor 102 and 202 may receive a signal (e.g., a baseband signal) from the at least one transceiver 106 and 206 and may obtain a PDU, an SDU, a message, control information, data, or information according to the descriptions, functions, procedures, proposals, methods, and/or operational flowcharts disclosed herein.

The at least one processor 102 and 202 may be referred to as a controller, a microcontroller, a microprocessor, or a microcomputer. The at least one processor 102 and 202 may be implemented by hardware, firmware, software, or a combination thereof. For example, at least one application-specific integrated circuit (ASIC), at least one digital signal processor (DSP), at least one digital signal processing devices (DSPD), at least one programmable logic devices (PLD), or at least one field programmable gate array (FPGA) may be included in the at least one processor 102 and 202. The one or more processors 102 and 202 may be implemented as at least one computer readable medium (CRM) including instructions based on being executed by the at least one processor.

For example, each method described in FIGS. 14 to 16 may be performed by at least one computer readable medium (CRM) including instructions based on being executed by at least one processor. The CRM may perform, for example, receiving a higher layer configuration message for configuring resources and receiving a DCI format for scheduling the PUSCH transmission wherein the DCI format indicates a specific row in a resource allocation table and the specific row informs symbols that can be used for the PUSCH transmission in a slot, and determining the number of slots (N-K) for transmitting the PUSCH where N and K are natural numbers, respectively, and transmitting the PUSCH in the N-K slots. Here, if at least one of the symbols available for PUSCH transmission in the slot overlaps with a downlink symbol indicated by the higher layer configuration message, the slot is not counted in the N·K slots. The first slot in which the first PUCCH transmission carrying periodic channel state information (CSI) and the PUSCH transmission are expected to collide is determined as an unavailable slot and not counted in the N·K slots. A second slot in which a second PUCCH transmission that does not carry periodic CSI and the PUSCH transmission are expected to collide is determined as an available slot and counted in the N·K slots, and the PUSCH transmission in the second slot is postponed to the next slot.

The descriptions, functions, procedures, proposals, methods, and/or operational flowcharts disclosed herein may be implemented using firmware or software, and the firmware or software may be configured to include modules, procedures, functions, and the like. The firmware or software configured to perform the descriptions, functions, procedures, proposals, methods, and/or operational flowcharts disclosed herein may be included in the at least one processor 102 and 202 or may be stored in the at least one memory 104 and 204 and may be executed by the at least one processor 102 and 202. The descriptions, functions, procedures, proposals, methods, and/or operational flowcharts disclosed herein may be implemented in the form of a code, an instruction, and/or a set of instructions using firmware or software.

The at least one memory 104 and 204 may be connected to the at least one processor 102 and 202 and may store various forms of data, signals, messages, information, programs, codes, indications, and/or commands. The at least one memory 104 and 204 may be configured as a ROM, a RAM, an EPROM, a flash memory, a hard drive, a register, a cache memory, a computer-readable storage medium, and/or a combinations thereof. The at least one memory 104 and 204 may be disposed inside and/or outside the at least one processor 102 and 202. In addition, the at least one memory 104 and 204 may be connected to the at least one processor 102 and 202 through various techniques, such as a wired or wireless connection.

The at least one transceiver 106 and 206 may transmit user data, control information, a radio signal/channel, or the like mentioned in the methods and/or operational flowcharts disclosed herein to at least different device. The at least one transceiver 106 and 206 may receive user data, control information, a radio signal/channel, or the like mentioned in the descriptions, functions, procedures, proposals, methods, and/or operational flowcharts disclosed herein from at least one different device. For example, the at least one transceiver 106 and 206 may be connected to the at least one processor 102 and 202 and may transmit and receive a radio signal. For example, the at least one processor 102 and 202 may control the at least one transceiver 106 and 206 to transmit user data, control information, or a radio signal to at least one different device. In addition, the at least one processor 102 and 202 may control the at least one transceiver 106 and 206 to receive user data, control information, or a radio signal from at least one different device. The at least one transceiver 106 and 206 may be connected to the at least one antenna 108 and 208 and may be configured to transmit or receive user data, control information, a radio signal/channel, or the like mentioned in the descriptions, functions, procedures, proposals, methods, and/or operational flowcharts disclosed herein through the at least one antenna 108 and 208. In this document, the at least one antenna may be a plurality of physical antennas or may be a plurality of logical antennas (e.g., antenna ports). The at least one transceiver 106 and 206 may convert a received radio signal/channel from an RF band signal into a baseband signal in order to process received user data, control information, a radio signal/channel, or the like using the at least one processor 102 and 202. The at least one transceiver 106 and 206 may convert user data, control information, a radio signal/channel, or the like, processed using the at least one processor 102 and 202, from a baseband signal to an RF bad signal. To this end, the at least one transceiver 106 and 206 may include an (analog) oscillator and/or a filter.

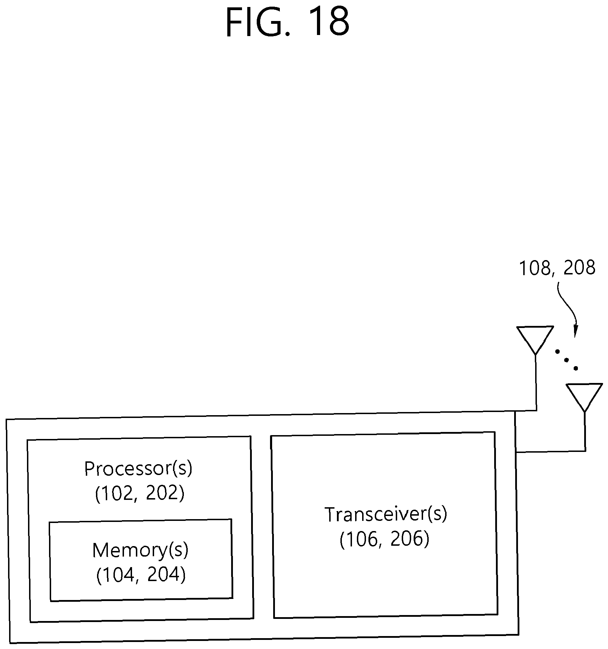

FIG. 18 shows another example of a wireless device.

Referring to FIG. 18, the wireless device may include at least one processor 102, 202, at least one memory 104, 204, at least one transceiver 106, 206, and one or more antennas 108, 208.

The example of the wireless device described in FIG. 18 is different from the example of the wireless described in FIG. 17 in that the processors 102 and 202 and the memories 104 and 204 are separated in FIG. 17 whereas the memories 104 and 204 are included in the processors 102 and 202 in the example of FIG. 18. That is, the processor and the memory may constitute one chipset.

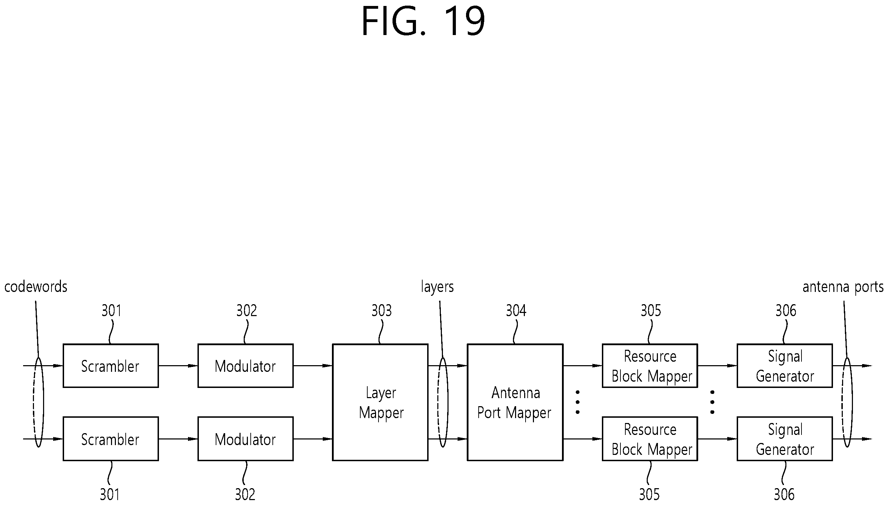

FIG. 19 shows an example of a structure of a signal processing module. Herein, signal processing may be performed in the processors 102 and 202 of FIG. 17.

Referring to FIG. 19, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

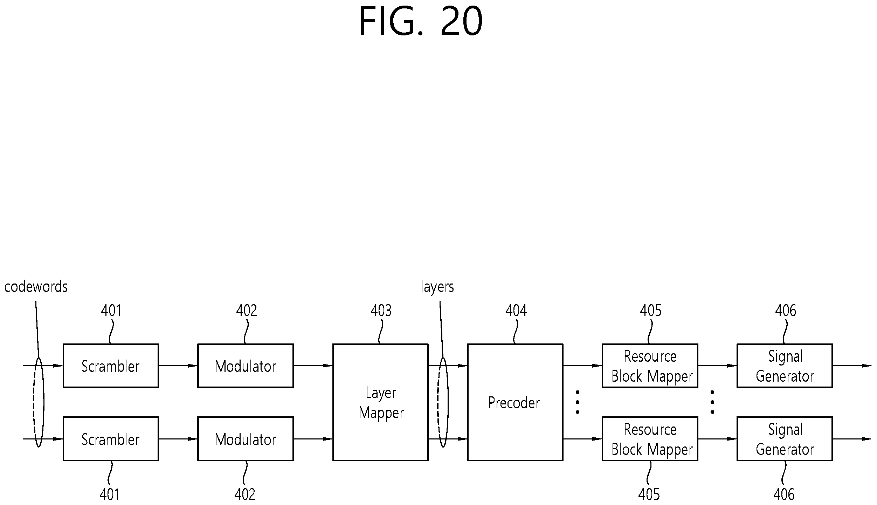

FIG. 20 shows another example of a structure of a signal processing module in a transmitting device. Herein, signal processing may be performed in a processor of a UE/BS, such as the processors 102 and 202 of FIG. 17.

Referring to FIG. 20, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

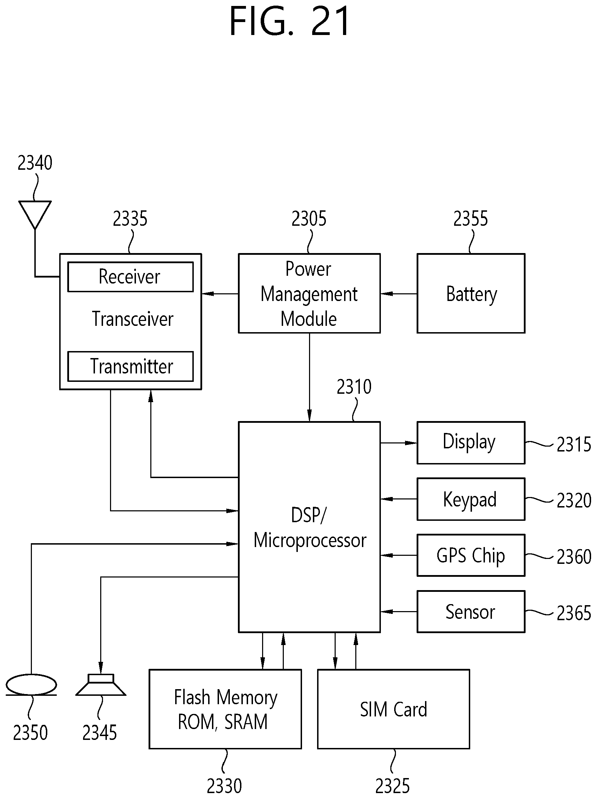

FIG. 21 illustrates an example of a wireless communication device according to an implementation example of the present disclosure.

Referring to FIG. 21, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 21 may be the processors 102 and 202 in FIG. 17.

The memory 2330 is connected to the processor 2310 and stores information related to operations of the processor. The memory may be located inside or outside the processor and connected to the processor through various techniques such as wired connection and wireless connection. The memory 2330 in FIG. 21 may be the memories 104 and 204 in FIG. 17.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 21 may be the transceivers 106 and 206 in FIG. 17.

Although not shown in FIG. 21, various components such as a camera and a universal serial bus (USB) port may be additionally included in the UE. For example, the camera may be connected to the processor 2310.

FIG. 21 is an example of implementation with respect to the UE and implementation examples of the present disclosure are not limited thereto. The UE need not essentially include all the components shown in FIG. 21. That is, some of the components, for example, the keypad 2320, the GPS chip 2360, the sensor 2365 and the SIM card 2325 may not be essential components. In this case, they may not be included in the UE.

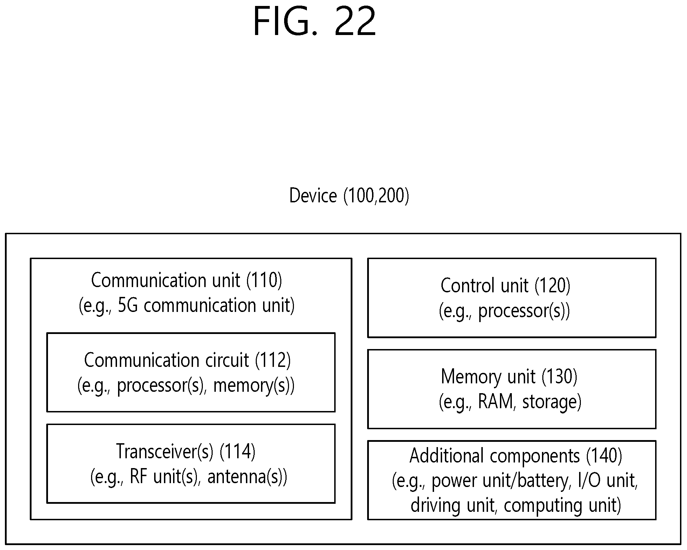

FIG. 22 shows another example of a wireless device applied to the present specification. The wireless device may be implemented in various forms according to a use-case/service.

Referring to FIG. 22, wireless devices 100 and 200 may correspond to the wireless devices of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

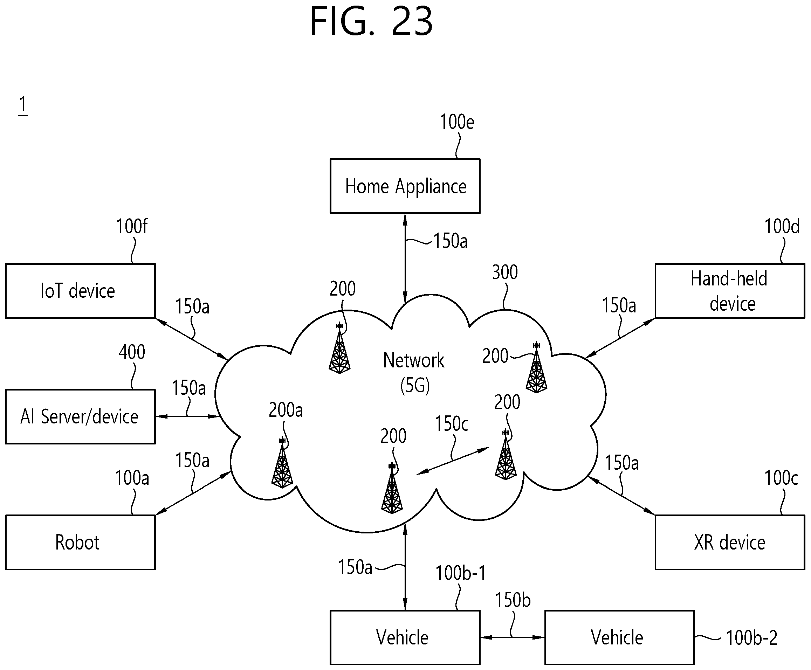

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast UE, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. In addition, each element, component, unit/portion, and/or module within the wireless devices 100 and 200 may further include one or more elements. For example, the control unit 120 may be configured by a set of one or more processors. For example, the control unit 120 may be configured by a set of a communication control processor, an application processor, an Electronic Control Unit (ECU), a graphical processing unit, and a memory control processor. For another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 23 illustrates a communication system 1 applied to the present specification.

Referring to FIG. 23, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Here, the wireless communication technology implemented in the wireless devices 100 and 200 of the present specification may include a narrowband Internet of Things for low-power communication as well as LTE, NR, and 6G. At this time, for example, NB-IoT technology may be an example of LPWAN (Low Power Wide Area Network) technology, and it may be implemented in standards such as LTE Cat NB1 and/or LTE Cat NB2, and is not limited to the above-described name. Additionally or alternatively, the wireless communication technology implemented in the wireless devices 100 and 200 of the present specification may perform communication based on the LTE-M technology. In this case, as an example, the LTE-M technology may be an example of an LPWAN technology, and may be called by various names such as enhanced machine type communication (eMTC). For example, LTE-M technology may be implemented in at least one of various standards such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described name. Additionally or alternatively, the wireless communication technology implemented in the wireless devices 100 and 200 of the present specification may include at least one of ZigBee, Bluetooth, and Low Power Wide Area Network (LPWAN) in consideration of low power communication, and is not limited to the above-mentioned names. For example, the ZigBee technology can create PAN (personal area networks) related to small/low-power digital communication based on various standards such as IEEE 802.15.4, and can be called by various names.

NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 6. For convenience of description, FR1 of the frequency ranges used for an NR system may refer to a "sub 6 GHz range", and FR2 may refer to an "above 6 GHz range" and may be referred to as a millimeter wave (mmW).

[Table 6]

| Frequency range designation | Corresponding frequency range | Subcarrier spacing |
|---|---|---|
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 7. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

[Table 7]

| Frequency range designation | Corresponding frequency range | Subcarrier spacing |
|---|---|---|
| FR1 | 410 MHz - 7125 MHz | 15, 30, 60 kHz |
| FR2 | 24250 MHz - 52600 MHz | 60, 120, 240 kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method for a physical uplink shared channel (PUSCH) transmission of a user equipment (UE) in a wireless communication system, the method comprising:

   receiving a higher layer configuration message for configuring resources;
   receiving a downlink control information (DCI) format for scheduling the PUSCH transmission, wherein the DCI format indicates a specific row in a resource allocation table, and the specific row informs of symbols that can be used for the PUSCH transmission in a slot;
   determining a number of slots for transmitting the PUSCH (N-K), where N and K are natural numbers, respectively; and
   transmitting the PUSCH in the N·K slots,
   wherein based on at least one of symbols available for PUSCH transmission in the slot overlapping with a downlink symbol indicated by the higher layer configuration message, the slot is not counted in the N·K slots,
   wherein a first slot in which a first PUCCH transmission carrying periodic channel state information (CSI) and the PUSCH transmission are expected to collide is determined as an unavailable slot and not counted in the N·K slots, and
   wherein a second slot in which a second PUCCH transmission that does not carry periodic CSI and the PUSCH transmission are expected to collide is determined as an available slot and counted in the N·K slots and the PUSCH transmission in the second slot is postponed to a next slot.

2. The method of claim 1, wherein the higher layer configuration message includes at least one of a cell-specific time division duplex (TDD) uplink/downlink (UL/DL) configuration, a UE-specific TDD UL/DL configuration or a SSB position informing of a time domain location where synchronization signal block is transmitted.

3. The method of claim 1, wherein the DCI format includes a time domain resource assignment (TDRA) field, and a value of the TDRA field informs of the specific row.

4. The method of claim 1, wherein the PUSCH is a repetition type A PUSCH that is repeatedly transmitted in a same starting symbol position and a same number of PUSCH transmission symbols in each of the N·K slots.

5. The method of claim 1, wherein the PUSCH is a transport block processing over multiple slots (TBoMS) PUSCH that processes and transmits one transport block over N slots.

6. The method of claim 1, wherein a third slot in which sounding reference signal (SRS) transmission and the PUSCH transmission are expected to collide is determined as an unavailable slot and is not counted in the N·K slots.

7. The method of claim 1, wherein a fourth slot in which Ultra-Reliable and Low Latency Communications (URLLC) PUSCH transmission and the PUSCH transmission are expected to collide is determined as an unavailable slot and is not counted in the N·K slots.

8. A user equipment (UE) comprising:

   a transceiver for transmitting and receiving a radio signal; and
   a processor operating in connected to the transceiver,
   wherein the processor is adapted to:

      receive a higher layer configuration message for configuring resources;
      receive a downlink control information (DCI) format for scheduling the PUSCH transmission, wherein the DCI format indicates a specific row in a resource allocation table, and the specific row informs of symbols that can be used for the PUSCH transmission in a slot;
      determine a number of slots for transmitting the PUSCH (N-K), where N and K are natural numbers, respectively; and
      transmit the PUSCH in the N·K slots,
      wherein based on at least one of symbols available for PUSCH transmission in the slot overlapping with a downlink symbol indicated by the higher layer configuration message, the slot is not counted in the N·K slots,
      wherein a first slot in which a first PUCCH transmission carrying periodic channel state information (CSI) and the PUSCH transmission are expected to collide is determined as an unavailable slot and not counted in the N·K slots, and

wherein a second slot in which a second PUCCH transmission that does not carry periodic CSI and the PUSCH transmission are expected to collide is determined as an available slot and counted in the N·K slots and the PUSCH transmission in the second slot is postponed to a next slot.

9. The UE of claim 8, wherein the higher layer configuration message includes at least one of a cell-specific time division duplex (TDD) uplink/downlink (UL/DL) configuration, a UE-specific TDD UL/DL configuration or a SSB position informing of a time domain location where synchronization signal block is transmitted.

10. The UE of claim 8, wherein the DCI format includes a time domain resource assignment (TDRA) field, and a value of the TDRA field informs of the specific row.

11. The UE of claim 8, wherein the PUSCH is a repetition type A PUSCH that is repeatedly transmitted in a same starting symbol position and a same number of PUSCH transmission symbols in each of the N·K slots.

12. The UE of claim 8, wherein the PUSCH is a transport block processing over multiple slots (TBoMS) PUSCH that processes and transmits one transport block over N slots.

13. The UE of claim 8, wherein a third slot in which sounding reference signal (SRS) transmission and the PUSCH transmission are expected to collide is determined as an unavailable slot and is not counted in the N·K slots.

14. The UE of claim 8, wherein a fourth slot in which Ultra-Reliable and Low Latency Communications (URLLC) PUSCH transmission and the PUSCH transmission are expected to collide is determined as an unavailable slot and is not counted in the N·K slots.

15. An apparatus operated in a wireless communication system, the apparatus comprising:

a processor; and
a memory coupled to the processor and storing instructions to be executed by the processor,
wherein the instructions comprise:

receiving a higher layer configuration message for configuring resources;
receiving a downlink control information (DCI) format for scheduling the PUSCH transmission, wherein the DCI format indicates a specific row in a resource allocation table, and the specific row informs of symbols that can be used for the PUSCH transmission in a slot;
determining a number of slots for transmitting the PUSCH (N-K), where N and K are natural numbers, respectively; and
transmitting the PUSCH in the N·K slots,
wherein based on at least one of symbols available for PUSCH transmission in the slot overlapping with a downlink symbol indicated by the higher layer configuration message, the slot is not counted in the N·K slots,
wherein a first slot in which a first PUCCH transmission carrying periodic channel state information (CSI) and the PUSCH transmission are expected to collide is determined as an unavailable slot and not counted in the N·K slots, and
wherein a second slot in which a second PUCCH transmission that does not carry periodic CSI and the PUSCH transmission are expected to collide is determined as an available slot and counted in the N·K slots and the PUSCH transmission in the second slot is postponed to a next slot.

16. At least one computer-readable medium (CRM) comprising an instruction based on being executed by at least one processor, wherein the instruction comprises:

receiving a higher layer configuration message for configuring resources;
receiving a downlink control information (DCI) format for scheduling the PUSCH transmission, wherein the DCI format indicates a specific row in a resource allocation table, and the specific row informs of symbols that can be used for the PUSCH transmission in a slot;
determining a number of slots for transmitting the PUSCH (N-K), where N and K are natural numbers, respectively; and
transmitting the PUSCH in the N·K slots,
wherein based on at least one of symbols available for PUSCH transmission in the slot overlapping with a downlink symbol indicated by the higher layer configuration message, the slot is not counted in the N·K slots, wherein a first slot in which a first PUCCH transmission carrying periodic channel state information (CSI) and the PUSCH transmission are expected to collide is determined as an unavailable slot and not counted in the N·K slots, and

wherein a second slot in which a second PUCCH transmission that does not carry periodic CSI and the PUSCH transmission are expected to collide is determined as an available slot and counted in the N·K slots and the PUSCH transmission in the second slot is postponed to a next slot.

17. A method for receiving a physical uplink shared channel (PUSCH) by a base station in a wireless communication system, the method comprising:

transmitting a higher layer configuration message for configuring resources to a user equipment (UE);
transmitting a downlink control information (DCI) format for scheduling the PUSCH transmission to the UE, wherein the DCI format indicates a specific row in a resource allocation table, and the specific row informs of symbols that can be used for the PUSCH transmission in a slot; and
receiving the PUSCH in N·K slots from the UE, where N and K are natural numbers, respectively,
wherein based on at least one of symbols available for PUSCH transmission in the slot overlapping with a downlink symbol indicated by the higher layer configuration message, the slot is not counted in the N·K slots, wherein a first slot in which a first PUCCH transmission carrying periodic channel state information (CSI) and the PUSCH transmission are expected to collide is determined as an unavailable slot and not counted in the N·K slots, and
wherein a second slot in which a second PUCCH transmission that does not carry periodic CSI and the PUSCH transmission are expected to collide is determined as an available slot and counted in the N·K slots and the PUSCH reception in the second slot is postponed to a next slot.

18. A base station comprising:

a transceiver for transmitting and receiving a radio signal; and
a processor operating in connected to the transceiver,
wherein the processor is adapted to:

transmit a higher layer configuration message for configuring resources to a user equipment (UE);
transmit a downlink control information (DCI) format for scheduling the PUSCH transmission to the UE, wherein the DCI format indicates a specific row in a resource allocation table, and the specific row informs of symbols that can be used for the PUSCH transmission in a slot; and
receive the PUSCH in N·K slots from the UE, where N and K are natural numbers, respectively,
wherein based on at least one of symbols available for PUSCH transmission in the slot overlapping with a downlink symbol indicated by the higher layer configuration message, the slot is not counted in the N·K slots, wherein a first slot in which a first PUCCH transmission carrying periodic channel state information (CSI) and the PUSCH transmission are expected to collide is determined as an unavailable slot and not counted in the N·K slots, and
wherein a second slot in which a second PUCCH transmission that does not carry periodic CSI and the PUSCH transmission are expected to collide is determined as an available slot and counted in the N·K slots and the PUSCH reception in the second slot is postponed to a next slot.

# FIG. 1

# FIG. 2

# FIG. 3

# FIG. 4

**gNB**

| |
|---|
| RRM between cells |
| RB control |
| Connection mobility control |
| Wireless access control |
| Measurement setting and providing |
| Dynamic resource allocation (scheduler) |

NG-RAN

**AMF**

| |
|---|
| NAS security |
| Idle state mobility processing |

**SMF**

| |
|---|
| Terminal IP address allocation |
| PDU session control |

**UPF**

| |
|---|
| Mobility anchoring |
| PDU processing |

Internet

5GC

# FIG. 5

```
···   ┌──────────────────────────────────────────────────┐   ···
      │                 One Frame (10ms)                 │
      └──────────────────────────────────────────────────┘

···   ┌──────────────────────┐   ┌──────────────────────┐   ···
      │   Half-Frame (5ms)    │   │   Half-Frame (5ms)    │
      └──────────────────────┘   └──────────────────────┘

···  ┌──────────┐      ┌──────────┐  ┌──────────┐       ┌──────────┐  ···
     │Subframe 0│ ···  │Subframe 4│  │Subframe 5│  ···  │Subframe 9│
     │  (1ms)   │      │  (1ms)   │  │  (1ms)   │       │  (1ms)   │
     └──────────┘      └──────────┘  └──────────┘       └──────────┘
```

Subframe (1ms)

|          | Slot 0 (14symbols) |
|----------|--------------------|
| 15KHz    | Slot 0 (14symbols) |

1ms

| 30KHz | Slot 0 (14symbols) | Slot 1 |
|-------|--------------------|--------|

500us

| 60KHz | Slot 0 (14symbols) | Slot 1 | Slot 2 | Slot 3 |
|-------|--------------------|--------|--------|--------|

250us

| 120KHz | Slot 0 (14symbols) | Slot 1 | Slot 2 | Slot 3 | Slot 4 | Slot 5 | Slot 6 | Slot 7 |
|--------|--------------------|--------|--------|--------|--------|--------|--------|--------|

125us

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 322 677 A1

# FIG. 7

DL only

UL only

DL control

UL control

Mixed UL-DL

Slot

: DL     : UL

# FIG. 8

EP 4 322 677 A1

Initial cell search | system information reception | random access procedure | general DL/UL Tx/Rx

P/S-SCH &
[DLRS] &
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S11    S12    S13    S14    S15    S16    S17    S18

• DL/UL ACK/NACK
• UE CQI/PMI/Rank report using PUSCH and/or PUCCH

# FIG. 9

PUSCH repetition type A

# FIG. 10

(a)

(b)

# FIG. 11

slot

Tx occasion 0   Tx occasion 1   Tx occasion 2   Tx occasion 3

PUSCH repetitions with Z=2, K=4

# FIG. 12

EP 4 322 677 A1

# FIG. 13

| slot n | slot n+1 | slot n+2 | slot n+3 |
|:---:|:---:|:---:|:---:|
| PUSCH | PUSCH | PUSCH SRS | PUSCH |
| 14 symbols | 14 symbols | 14 symbols | 14 symbols |

# FIG. 14

```
┌─────────────────────────────────────────┐
│  Receiving a higher layer configuration  │
│           message                        │ ~S141
│       for setting resources              │
└─────────────────────────────────────────┘
                    │
                    ▼
┌─────────────────────────────────────────┐
│ Receiving DCI format for scheduling PUSCH│
│  transmission                            │
│  (for example, DCI format 0_1 or DCI     │ ~S142
│  format 0_2)                             │
│  The DCI format indicates a specific row │
│  in a resource allocation table, and the │
│  specific row informs of symbols that    │
│  can be used for the PUSCH transmission  │
│  in a slot                               │
└─────────────────────────────────────────┘
                    │
                    ▼
┌─────────────────────────────────────────┐
│  Determining the number of slots (N·K)   │
│  for the PUSCH transmission (Specifically│
│  if at least one of the symbols available│
│  for PUSCH transmission in a slot overlaps│ ~S143
│  with a downlink symbol indicated by the │
│  higher layer configuration message, the │
│  slot is not counted in the N·K slots    │
│  The first slot in which the first PUCCH │
│  transmission carrying periodic CSI and  │
│  the PUSCH transmission are expected to   │
│  collide are determined as an unavailable │
│  slot and is not counted among the N·K   │
│  slots. A second slot in which a second  │
│  PUCCH transmission not carrying periodic│
│  CSI and the PUSCH transmission are      │
│  expected to collide are determined as an│
│  available slot and counted in the N·K   │
│  slots However, the PUSCH transmission in│
│  the second slot is not performed and is │
│  postponed to the next slot)             │
└─────────────────────────────────────────┘
                    │
                    ▼
┌─────────────────────────────────────────┐
│   Transmitting the PUSCH in the N·K slots│ ~S144
└─────────────────────────────────────────┘
```

# FIG. 15

PUCCH

151

slot

Tx occasion 0

Tx occasion 1

PUSCH repetitions with Z=4, K=2

# FIG. 16

```
┌─────────────┐                                          ┌─────────────┐
│   Network   │                                          │     UE      │
│    (BS)     │                                          │             │
└─────────────┘                                          └─────────────┘
      │                                                         │
      │        Higher layer configuration message              │
      │  (at least one of the tdd-UL-DL-ConfigurationCommon,    │
      │      tdd-UL-DL-ConfigurationDedicated or                │
      │          ssb-PositionsInBurst)                          │
      │────────────────────────────────────────────────────────▶  ∽ S161
      │                                                         │
      │         Configuration information                       │
      │    related to the slot counting method                  │
      │          (AvailableSlotCounting)                        │
      │────────────────────────────────────────────────────────▶  ∽ S162
      │                                                         │
      │      DCI format 0_1 or DCI format 0_2                    │
      │           (including a TDRA field)                      │
      │────────────────────────────────────────────────────────▶  ∽ S163
      │                                                         │
      │                   ┌──────────────────────────────────┐  │
      │                   │        Determining a number of    │  ∽ S164
      │                   │  slots (N·K) for the PUSCH transmission
      │                   │  (for example, PUSCH transmission of │
      │                   │      PUSCH repetition type A,      │  │
      │                   │    or TBoMS PUSCH transmission)    │  │
      │                   └──────────────────────────────────┘  │
      │                                                         │
      │        Transmitting the PUSCH through                   │
      │               the N·K slots                             │
      │◀────────────────────────────────────────────────────────  ∽ S165
      │                                                         │
      │                                                         │
```

# FIG. 17

EP 4 322 677 A1

# FIG. 18

108, 208

Processor(s)
(102, 202)

Memory(s)
(104, 204)

Transceiver(s)
(106, 206)

FIG. 19

# FIG. 20

EP 4 322 677 A1

codewords

layers

| 401 | 402 | 403 | 404 | 405 | 406 |

```
          401              402                403            404              405              406
codewords ─┬─→ ┌─────────┐    ┌─────────┐   ┌─────────┐   ┌─────────┐   ┌──────────┐   ┌──────────┐
           │   │Scrambler│ →  │Modulator│ → │         │   │         │ → │ Resource │ → │  Signal  │ →
           │   └─────────┘    └─────────┘   │  Layer  │ ⋮ │Precoder │ ⋮ │Block Mapper│  │Generator │
           │                                │ Mapper  │   │         │   └──────────┘   └──────────┘
           └─→ ┌─────────┐    ┌─────────┐   │         │ → │         │ → ┌──────────┐   ┌──────────┐
               │Scrambler│ →  │Modulator│ → │         │   │         │   │ Resource │ → │  Signal  │ →
               └─────────┘    └─────────┘   └─────────┘   └─────────┘   │Block Mapper│  │Generator │
                  401              402                                  └──────────┘   └──────────┘
                                                                           405              406
```

# FIG. 21

# FIG. 22

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

EP 4 322 677 A1

# FIG. 23

<table>
<tr><td colspan="2" style="text-align:center"><b>INTERNATIONAL SEARCH REPORT</b></td><td colspan="2">International application No.<br><b>PCT/KR2022/004910</b></td></tr>
</table>

**A. CLASSIFICATION OF SUBJECT MATTER**

**H04W 72/12**(2009.01)i; **H04W 72/04**(2009.01)i; **H04L 5/00**(2006.01)i; **H04L 1/00**(2006.01)i; **H04L 5/14**(2006.01)i

According to International Patent Classification (IPC) or to both national classification and IPC

**B. FIELDS SEARCHED**

Minimum documentation searched (classification system followed by classification symbols)

H04W 72/12(2009.01); H04L 5/00(2006.01); H04L 5/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH(physical uplink shared channel), 반복(repetition), 슬롯(slot), 개수(number), 카운트(count), 연기(postpone), CSI(channel state information), 주기적(periodic)

**C. DOCUMENTS CONSIDERED TO BE RELEVANT**

| Category* | Citation of document, with indication, where appropriate, of the relevant passages | Relevant to claim No. |
|---|---|---|
| A | VIVO. Discussion on enhancement for PUSCH repetition type A. R1-2100457, 3GPP TSG RAN WG1 #104-e, e-Meeting. 18 January 2021.<br>See sections 3-4. | 1-18 |
| A | LENOVO et al. Enhancements on PUSCH repetition type A. R1-2101001, 3GPP TSG RAN WG1 #104-e, e-meeting. 19 January 2021.<br>See secton 2; and table 1. | 1-18 |
| A | MODERATOR (NOKIA). Summary #3 of Multi-TRP for PUCCH and PUSCH. R1-2102060, 3GPP TSG RAN WG1 #104-e, e-Meeting. 05 February 2021.<br>See section 3. | 1-18 |
| A | LG ELECTRONICS. Discussions on PUSCH repetition type A enhancements. R1-2100712, 3GPP TSG RAN WG1 #104-e, e-Meeting. 19 January 2021.<br>See section 2. | 1-18 |
| A | WO 2020-167650 A1 (IDAC HOLDINGS, INC.) 20 August 2020 (2020-08-20)<br>See claims 1-10. | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2022** | **14 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2022/004910**

| Patent document cited in search report | | | Publication date (day/month/year) | Patent family member(s) | | | Publication date (day/month/year) |
|---|---|---|---|---|---|---|---|
| WO | 2020-167650 | A1 | 20 August 2020 | CN | 113519138 | A | 19 October 2021 |
| | | | | EP | 3925149 | A1 | 22 December 2021 |
| | | | | KR | 10-2021-0137445 | A | 17 November 2021 |
| | | | | TW | 202038575 | A | 16 October 2020 |

Form PCT/ISA/210 (patent family annex) (July 2019)